# EUROPEAN PATENT APPLICATION

(11) **EP 0 966 162 A1**
(43) Date of publication of application: **22.12.1999**
(21) Application number: 98961587.7
(22) Date of filing: 25.12.1998
(51) Int. Cl.: H04N 7/46, H04N 5/92

(54) **VIDEO SIGNAL REPRODUCING DEVICE AND HIERARCHICAL VIDEO SIGNAL DECODER**

(30) Priority: 08.01.1998 JP 200998; 20.05.1998 JP 13880498
(71) Applicant: Matsushita Electric Industrial Co., Ltd., Kadoma-shi, Osaka 571-8501 (JP)
(72) Inventor: TAKEUCHI, Seiichi, Neyagawa-shi Osaka 572-0018 (JP); NISHINO, Masakazu, Kashiwara-shi Osaka 582-0007 (JP)
(74) Representative: Grünecker, Kinkeldey, Stockmair & Schwanhäusser Anwaltssozietät
(86) International application number: JP9805943
(87) International publication number: WO9935853

(57) **Abstract**

Disclosed is a video signal reproduction apparatus for decoding and reproducing a spatially layered encoded video signal, comprising: a first transmit data demodulator which outputs demodulated data by demodulating transmit data input thereto; a first demodulated data selector whereby, when a header in data on a receive channel in the demodulated data is decoded, if identification data, indicating that a low resolution bit stream, an encoded version of a low resolution video signal, and a high resolution bit stream, an encoded version of a difference signal taken between a high resolution video signal and low resolution signal, are multiplexed and modulated together, is recorded in a designated position in the header, the low resolution bit stream and the high resolution bit stream are separated and output independently and, at the same time, a switch control signal indicating that the low resolution bit stream and the high resolution bit stream have been separated is output, whereas if only one video signal bit stream is contained, the video signal bit stream is output to a first high efficiency decoder side but nothing to a second high efficiency decoder side and, at the same time, a switch control signal indicating that only one video signal bit stream has been output is output; a first high efficiency decoder which decodes the high resolution bit stream or the video signal bit stream; a second high efficiency decoder which decodes the low resolution bit stream; a resolution converter which converts the low resolution video signal decoded by the second high efficiency decoder into a high resolution signal having the same resolution as the high resolution video signal; and a switch which, when the switch control signal indicates that the low resolution bit stream and the high resolution bit stream have been separated, adds an output of the first high efficiency encoder and an output of the resolution converter pixel by pixel and outputs a high resolution video signal and, when the switch control signal indicates that only one video signal bit stream has been output, passes the output of the first high efficiency encoder unchanged for output as the video signal.

## Description

### TECHNICAL FIELD

The present invention relates to an encoding apparatus and a decoding apparatus that use layered video signal compression schemes.

### BACKGROUND ART

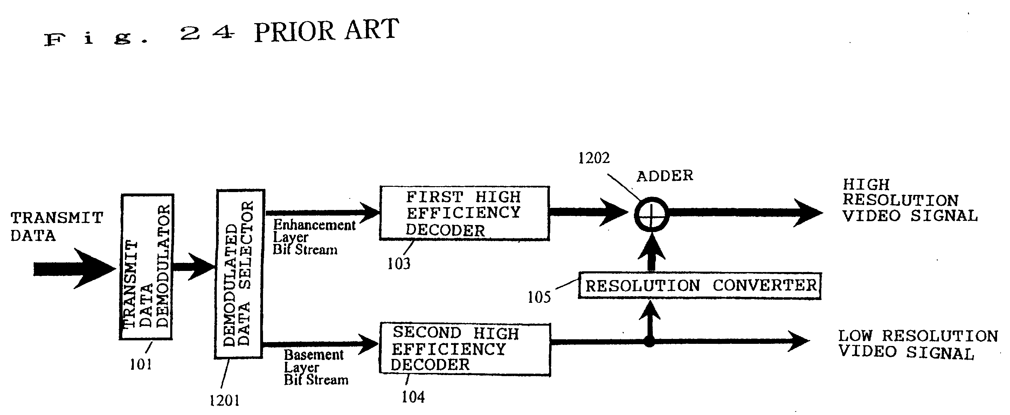

A prior art video signal reproduction apparatus will be described below with reference to Figure 24.

In Figure 24, reference numeral 101 is a transmit data demodulator, 1201 is a demodulated data selector, 103 is a first high efficiency decoder, 104 is a second high efficiency decoder, 105 is a resolution converter, and 1202 is an adder.

The first transmit data demodulator 101 demodulates transmit data input thereto and outputs demodulated data. The first demodulated data selector 1201 separates a low resolution bit stream and a high resolution bit stream from the demodulated data and outputs the respective bit streams. The first high efficiency decoder 103 applies first prescribed decoding to the high resolution bit stream input thereto and outputs the decoded signal.

The second high efficiency decoder 104 applies second prescribed decoding to the low resolution bit stream input thereto and outputs the decoded signal. The resolution converter 105 converts the low resolution decoded signal to the same resolution as a high resolution video signal and outputs the thus resolution converted signal. The adder 1202 adds the output of the first high efficiency encoder 103 and the output of the resolution converter 105 pixel by pixel and outputs the high resolution video signal.

On the other hand, as a prior art layered video signal encoding apparatus and layered video signal decoding apparatus, it is known to provide an encoding apparatus and decoding apparatus conforming to SSP (SpatialScalableProfile) which is spatially layered coding standardized by MPEG.

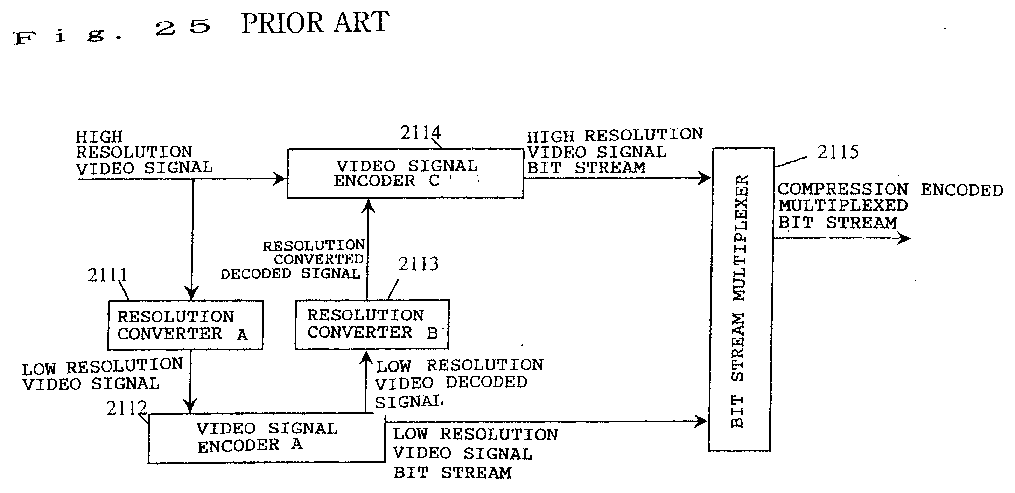

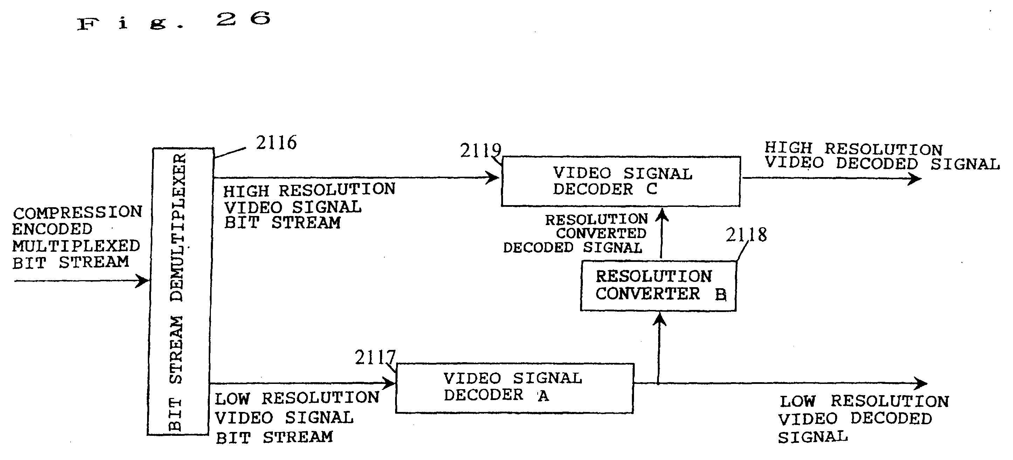

Such prior art layered video signal encoding apparatus and layered video signal decoding apparatus will be described below with reference to Figures 25 and 26, respectively.

In Figure 25, reference numeral 2111 is a resolution converter A, 2112 is a video signal encoder A, 2113 is a resolution converter B, 2114 is a video signal encoder C, and 2115 is a bit stream multiplexer. The high resolution video signal input into the resolution converter A 2111 is resolution converted and output as a low resolution video signal. The video signal encoder A 2112 outputs a low resolution video signal bit stream by encoding the low resolution video signal in accordance with MPEG compression, and also outputs a low resolution video decoded signal by decoding the low resolution video signal bit stream in accordance with MPEG compression. The resolution converter B 2113 converts the low resolution video decoded signal to the same resolution as the high resolution video signal, i.e., the input signal, using a prescribed approximation equation, and outputs the resolution converted decoded signal. The video signal encoder C 2114 encodes the high resolution video signal using the MPEG SSP compression scheme and outputs a high resolution video signal bit stream. The bit stream multiplexer 2115 outputs a compression encoded multiplexed bit stream by multiplexing the low resolution video signal bit stream with the high resolution video signal bit stream.

In Figure 26, reference numeral 2116 is a bit stream demultiplexer, 2117 is a video signal decoder A, and 2118 is a video signal decoder C. The bit stream demultiplexer 2116 outputs a filter information signal, low resolution video signal bit stream, and high resolution video signal bit stream by demultiplexing them from the compression encoded multiplexed bit stream. The video signal decoder A 2117 applies MPEG compression decoding to the low resolution video signal bit stream and outputs the low resolution decoded video signal. The resolution converter B 2113 converts it to the same resolution as the high resolution video signal using a prescribed approximation equation, and outputs the resolution converted signal. The video signal decoder C 2118 outputs the high resolution decoded signal by applying MPEG SSP compression decoding.

### DISCLOSURE OF THE INVENTION

The above prior art video signal reproduction apparatus has only been able to reproduce video signals encoded by layered encoding schemes, but has not been able to reproduce video signals encoded by non-layered encoding schemes, perform adaptive error correction, or reproduce appended information or additional region digital video signals.

The present invention can resolve the above problem since it can reproduce non-layered encoded video signals by obtaining reproduction channel information from identification data carried in transmit data or from the header in a bit stream, can perform adaptive error correction by using a low resolution bit stream, and is equipped with an additional function for reproducing appended information or an additional region digital video signal from a designated position in the reproduced data.

In the prior art decoding apparatus conforming to the MPEG-2 SSP (SpatialScalableProfile) which is a layered video signal encoding scheme, the decoded video signal of the low resolution video signal was resolution converted to the resolution of the high resolution video signal in accordance with a prescribed linear approximation equation. As a result, the resolution converted signal contained distortion associated with the linear approximation, causing ill effect on the reproduction quality of the high resolution video signal.

The present invention provides an encoding apparatus capable of transmitting prescribed FIR filter information to the receiver side and a decoding apparatus for the same; this achieves highly efficient resolution conversion and serves to improve the reproduction quality of the high resolution video signal.

### BRIEF DESCRIPTION OF THE DRAWINGS

Figure 1 is a block diagram of a video signal reproduction apparatus according to a first invention of the present application.
Figure 2 is a block diagram of a video signal reproduction apparatus according to a second invention of the present application.
Figure 3 is a block diagram of a video signal reproduction apparatus according to a third invention of the present application.
Figure 4 is a block diagram of a video signal reproduction apparatus according to a fourth invention of the present application.
Figure 5 is a block diagram of a video signal reproduction apparatus according to a fifth invention of the present application.
Figure 6 is a block diagram of a video signal reproduction apparatus according to a sixth invention of the present application.
Figure 7 is a block diagram of a video signal reproduction apparatus according to a seventh invention of the present application.
Figure 8 is a block diagram of a video signal reproduction apparatus according to an eighth invention of the present application.
Figure 9 is a block diagram of a video signal reproduction apparatus according to a ninth invention of the present application.
Figure 10 is a block diagram of a video signal reproduction apparatus according to a 10th invention of the present application.
Figure 11 is a block diagram of a video signal reproduction apparatus according to an 11th invention of the present application.
Figure 12 is a block diagram of a layered video signal encoding apparatus according to a 12th invention of the present application.
Figure 13 is a block diagram of a layered video signal encoding apparatus according to a 13th invention of the present application.
Figure 14 is a block diagram of a layered video signal encoding apparatus according to a 14th invention of the present application.
Figure 15 is a block diagram of a layered video signal encoding apparatus according to a 15th invention of the present application.
Figure 16 is a block diagram of a layered video signal encoding apparatus according to a 16th invention of the present application.
Figure 17 is a block diagram of a layered video signal encoding apparatus according to a 17th invention of the present application.
Figure 18 is a block diagram of a layered video signal decoding apparatus according to an 18th invention of the present application.
Figure 19 is a block diagram of a layered video signal decoding apparatus according to a 19th invention of the present application.
Figure 20 is a block diagram of a layered video signal decoding apparatus according to a 20th invention of the present application.
Figure 21 is a block diagram of a layered video signal decoding apparatus according to a 21st invention of the present application.
Figure 22 is a block diagram of a layered video signal decoding apparatus according to a 22nd invention of the present application.
Figure 23 is a block diagram of a layered video signal decoding apparatus according to a 23rd invention of the present application.
Figure 24 is a block diagram of a video signal reproduction apparatus according to the prior art.
Figure 25 is a block diagram of a layered video signal encoding apparatus according to the prior art.
Figure 26 is a block diagram of a layered video signal decoding apparatus according to the prior art.
Figure 27 is a block diagram of a video signal recording apparatus corresponding to the video signal reproduction apparatus of the 8th invention of the present application.
Figure 28 is a block diagram of a video signal recording apparatus corresponding to the video signal reproduction apparatus of the 9th invention of the present application.
Figure 29 is a block diagram of a video signal recording apparatus corresponding to the video signal reproduction apparatus of the 10th invention of the present application.
Figure 30 is a block diagram of a video signal recording apparatus corresponding to the video signal reproduction apparatus of the 11th invention of the present application.

### BEST MODE FOR CARRYING OUT THE INVENTION

### (Embodiment 1)

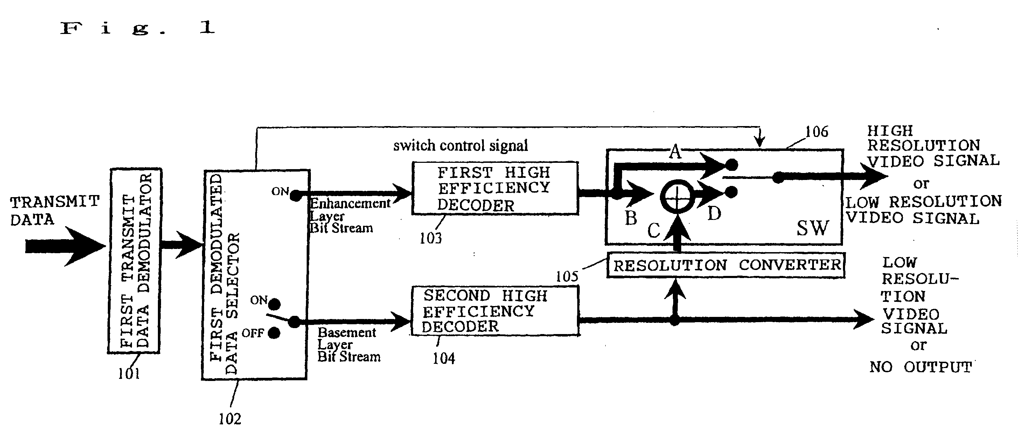

An embodiment for carrying out a first invention of the present application will be described below with reference to Figure 1.

In Figure 1, reference numeral 101 is a first transmit data demodulator, 102 is a first demodulated data selector, 103 is a first high efficiency decoder, 104 is a second high efficiency decoder, 105 is a resolution converter, and 106 is a switch.

The first transmit data demodulator 101 demodulates transmit data input thereto and outputs demodulated data.

The first demodulated data selector 102 analyzes the header of the demodulated data, whereby if identification data, indicating that the data on the channel to be decoded is one into which a low resolution bit stream, an encoded version of a low resolution video signal, and a high resolution bit stream, an encoded version of a difference signal taken between a high resolution video signal and low resolution signal, are multiplexed and modulated together, is detected as being recorded in a designated position in the header of the demodulated data, then the low resolution bit stream and the high resolution bit stream are separated and output independently and, at the same time, a switch control signal indicating that the low resolution bit stream and the high resolution bit stream have been separated is output. On the other hand, if the data on the channel to be decoded consists of only one video signal bit stream, the video signal bit stream is output to the high resolution bit stream side and, at the same time, a switch control signal indicating that only one video signal bit stream has been output is output.

The first high efficiency decoder 103 applies first prescribed decoding to the input bit stream and outputs the decoded signal. The second high efficiency encoder 104 applies second prescribed decoding to the input bit stream for output, and outputs the decoded signal. The resolution converter 105 converts the low resolution decoded signal to the same resolution as the high resolution video signal and outputs the thus resolution converted signal (C). When the switch control signal indicates that the low resolution bit stream and the high resolution bit stream have been separated, the switch 106 adds the output (B) of the first high efficiency encoder 103 and the output (C) of the resolution converter 105 pixel by pixel and outputs the high resolution video signal (D); on the other hand, when the switch control signal indicates that only one video signal bit stream has been output, the output of the first high efficiency encoder 103 is output directly as the video signal (A).

With the provision of the first demodulated data selector 102, the first invention of the present application is able to decode a video signal whether it is a layered compression encoded signal or a non-layered compression encoded signal.

### (Embodiment 2)

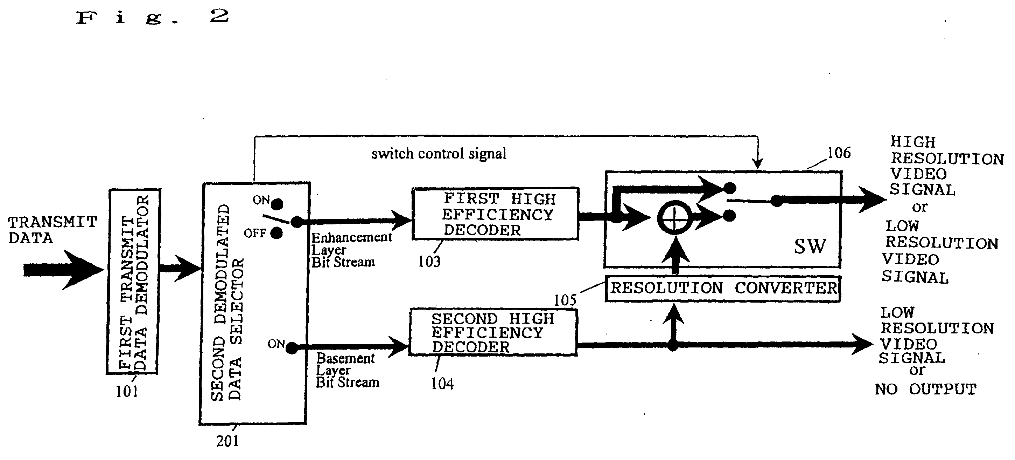

An embodiment for carrying out a second invention of the present application will be described below with reference to Figure 2.

Explanation of components in Figure 2 that are identical to those shown in Figure 1 will not be repeated here. In Figure 2, reference numeral 201 indicates a second demodulated data selector.

The demodulated data selector 201 analyzes the header of the input demodulated data, whereby if identification data, indicating that the data on the channel to be decoded is one into which a low resolution bit stream, an encoded version of a low resolution video signal, and a high resolution bit stream, an encoded version of a difference signal taken between a high resolution video signal and low resolution signal, are multiplexed and modulated together, is detected as being recorded in a designated position in the header of the demodulated data, then the low resolution bit stream and the high resolution bit stream are separated and output independently and, at the same time, a switch control signal indicating that the low resolution bit stream and the high resolution bit stream have been separated is output. On the other hand, if the data on the channel to be decoded consists of only one video signal bit stream, and if the resolution of that video signal is equal to or higher than a predetermined resolution (for example, 720 pixels horizontally and 480 lines vertically, with a frame rate of 60 Hz), then the demodulated data selector 201 outputs the video signal bit stream to the high resolution bit stream side but nothing to the low resolution bit stream side, while outputting a switch control signal indicating that only one video signal bit stream has been output. Further, if the data on the channel to be decoded consists of only one video signal bit stream, and if the resolution of that video signal is lower than the predetermined resolution, the demodulated data selector 201 outputs the video signal bit stream to the low resolution bit stream side but nothing to the high resolution bit stream side, while outputting a switch control signal indicating that only one video signal bit stream has been output.

The first high efficiency decoder 103 applies first prescribed decoding to the input bit stream and outputs the decoded signal. The second high efficiency encoder 104 applies second prescribed decoding to the input bit stream for output, and outputs the decoded signal.

The resolution converter 105 converts the low resolution decoded signal to the same resolution as the high resolution signal and outputs the thus converted high resolution signal. When the switch control signal indicates that the low resolution bit stream and the high resolution bit stream have been separated, the switch 106 adds the output of the first high efficiency encoder 103 and the output of the resolution converter 105 pixel by pixel and outputs the high resolution video signal; on the other hand, when the switch control signal indicates that only one high resolution bit stream has been output, the output of the first high efficiency encoder 103 is output directly as the video signal.

More specifically, in the case of only one high resolution bit stream, the switch 106 outputs the high resolution signal, with no output produced from the second high efficiency decoder 104, and in the case of only one low resolution bit stream, no output is produced from the switch 106, but the low resolution signal is output from the second high efficiency decoder 104.

With the provision of the second demodulated data selector 201, the second invention of the present application is able to decode a video signal whether it is a layered compression encoded signal or a non-layered compression encoded signal.

### (Embodiment 3)

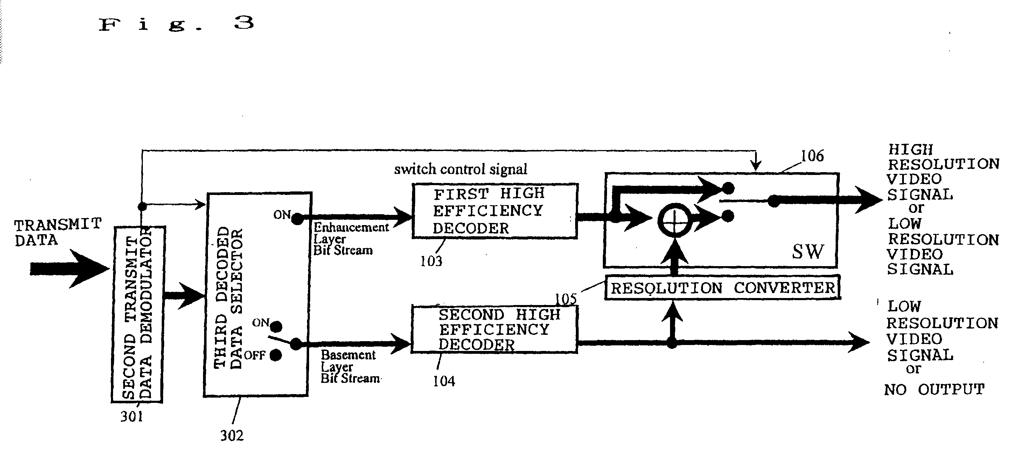

An embodiment for carrying out a third invention of the present application will be described below with reference to Figure 3.

Explanation of components in Figure 3 that are identical to those shown in Figure 1 will not be repeated here. In Figure 3, reference numeral 301 is a second transmit data demodulator 301, and 302 is a third demodulated data selector. If identification data, indicating that the data on the receive channel in the input transmit data is one into which a low resolution bit stream, an encoded version of a low resolution video signal, and a high resolution bit stream, an encoded version of a difference signal taken between a high resolution video signal and low resolution signal, are multiplexed and modulated together, is detected as being carried in a designated position in the transmit data, the second transmit data demodulator 301 outputs a switch control signal indicating that the low resolution bit stream and the high resolution bit stream are to be separated. If the identification data identifying the multiplexed data is not carried, the second transmit data demodulator 301 outputs a switch control signal indicating only one video signal bit stream, and demodulates the input transmit data to output the modulated data.

When the signal from the second transmit data demodulator 301 indicates that the low resolution bit stream and the high resolution bit stream are to be separated, the third demodulated data selector 302 separates the low resolution bit stream and the high resolution bit stream and outputs the respective bit streams; on the other hand, when the signal from the second transmit data demodulator 301 indicates only one video signal bit stream, the video signal bit stream is output to the first high efficiency decoder 103, but nothing is output to the second high efficiency decoder 104. The first high efficiency decoder 103 applies first prescribed decoding to the input bit stream and outputs the decoded signal.

The second high efficiency encoder 104 applies second prescribed decoding to the input bit stream for output, and outputs the decoded signal. The resolution converter 105 converts the low resolution decoded signal to the same resolution as the high resolution signal and outputs the thus converted high resolution signal.

When the switch control signal indicates that the low resolution bit stream and the high resolution bit stream have been separated, the switch 106 adds the output of the first high efficiency encoder 103 and the output of the resolution converter 105 pixel by pixel and outputs the high resolution video signal; on the other hand, when the switch control signal indicates that only one video signal bit stream has been output, the output of the second high efficiency encoder 103 is output directly as the video signal.

With the provision of the second transmit data demodulator 301 and the third demodulated data selector 302, the third invention of the present application is able to decode a video signal whether it is a layered compression encoded signal or a non-layered compression encoded signal.

### (Embodiment 4)

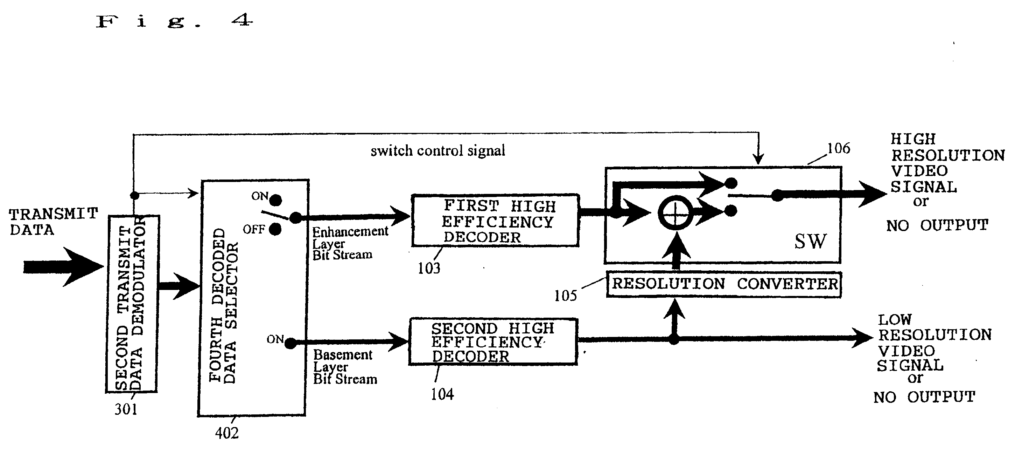

An embodiment for carrying out a fourth invention of the present application will be described below with reference to Figure 4.

Explanation of components in Figure 4 that are identical to those shown in Figure 1 or 2 will not be repeated here. In Figure 4, reference numeral 402 indicates a fourth demodulated data selector.

If identification data, indicating that the data on the receive channel in the input transmit data is one into which a low resolution bit stream, an encoded version of a low resolution video signal, and a high resolution bit stream, an encoded version of a difference signal taken between a high resolution video signal and low resolution signal, are multiplexed and modulated, is detected as being carried in a designated position in the transmit data, the second transmit data demodulator 301 outputs a switch control signal indicating that the low resolution bit stream and the high resolution bit stream are to be separated; on the other hand, if such identification data is not carried, the second transmit data demodulator 301 outputs a switch control signal indicating that only one video signal bit stream is to be separated, and demodulates the input transmit data to output the modulated data.

When the signal from the second transmit data demodulator 301 indicates that the low resolution bit stream and the high resolution bit stream are to be separated, the fourth demodulated data selector 402 separates the low resolution bit stream and the high resolution bit stream and outputs the respective bit streams. On the other hand, when the signal from the fourth transmit data demodulator 301 indicates that only one video signal bit stream is to be separated, the demodulated data selector 402 separates that video signal bit stream and analyzes its header; if the resolution of that video signal is equal to or higher than a predetermined resolution (for example, 720 pixels horizontally and 480 lines vertically, with a frame rate of 60 Hz), the video signal bit stream is output to the high resolution bit stream side but nothing to the low resolution bit stream side, and if the resolution of that video signal is lower than the predetermined resolution, the video signal bit stream is output to the low resolution bit stream side but nothing to the high resolution bit stream side.

The first high efficiency decoder 103 applies first prescribed decoding to the input bit stream and outputs the decoded signal. The second high efficiency encoder 104 applies second prescribed decoding to the input bit stream for output, and outputs the decoded signal. The resolution converter 105 converts the low resolution decoded signal to the same resolution as the high resolution signal and outputs the thus converted high resolution signal.

When the switch control signal indicates that the low resolution bit stream and the high resolution bit stream have been separated, the switch 106 adds the output of the first high efficiency encoder 103 and the output of the resolution converter 105 pixel by pixel and outputs the high resolution video signal; on the other hand, when the switch control signal indicates that only one video signal bit stream has been output, the output of the second high efficiency encoder 103 is output directly as the video signal.

With the provision of the fourth demodulated data selector 402, the fourth invention of the present application is able to decode a video signal whether it is a layered compression encoded signal or a non-layered compression encoded signal.

### (Embodiment 5)

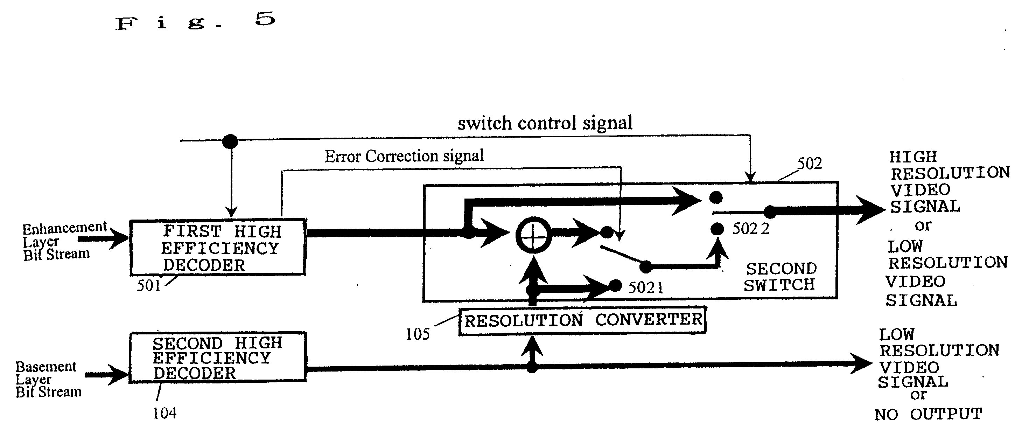

An embodiment for carrying out a fifth invention of the present application will be described below with reference to Figure 5. Explanation of components in Figure 5 that are identical to those shown in Figure 1 will not be repeated here. In Figure 5, reference numeral 501 indicates a first high efficiency decoder, and 502 designates a second switch.

The first high efficiency decoder 501 applies third prescribed decoding to the input high resolution bit stream, and outputs the decoded signal. In performing this decoding when the switch control signal indicates that the low resolution bit stream and the high resolution bit stream have been separated, if an error is detected in the high resolution bit stream, the first high efficiency decoder 501 continues to output an error correction signal until the decoding is accomplished correctly; it also outputs an error correction signal by detecting an error propagated portion.

The second high efficiency encoder 104 applies second prescribed decoding to the input low resolution bit stream for output, and outputs the decoded signal. The resolution converter 105 converts the low resolution decoded signal into a high resolution signal for output.

The second switch 502 has a two-stage switch configuration consisting of two switch stages 5021 and 5022; when the switch control signal indicates that the low resolution bit stream and the high resolution bit stream have been separated, if no error correction signals are delivered, the second switch 502 adds the output of the first high efficiency encoder 501 and the output of the resolution converter 105 pixel by pixel and outputs the high resolution video signal, and if an error correction signal is delivered, the output of the resolution converter 105 is directly output. On the other hand, when the switch control signal indicates that only one video signal bit stream has been output, the output of the first high efficiency encoder 501 is directly output as the video signal.

With the provision of the first high efficiency decoder 501 and the second switch 502, if an error has occurred in the high resolution bit stream, the fifth invention of the present application can correct the errored portion, as well as error propagated portions, by using the resolution converted version of the low resolution bit stream decoded signal.

### (Embodiment 6)

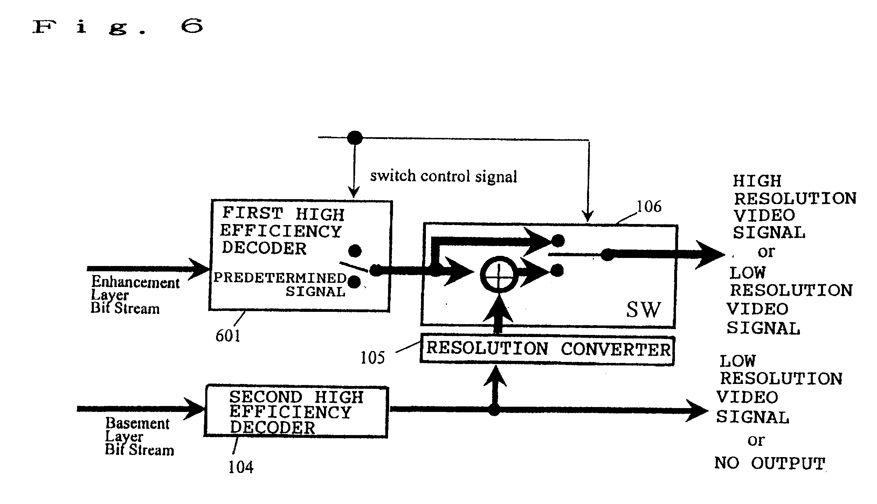

An embodiment for carrying out a sixth invention of the present application will be described below with reference to Figure 6.

Explanation of components in Figure 6 that are identical to those shown in Figure 1 will not be repeated here. In Figure 6, reference numeral 601 is a fourth high efficiency decoder.

The first high efficiency decoder 601 applies fourth prescribed decoding to the input high resolution bit stream, and outputs the decoded signal.

In performing this decoding when the switch control signal indicates that the low resolution bit stream and the high resolution bit stream have been separated, if an error is detected in the high resolution bit stream, the first high efficiency decoder 601 continues to output a signal of a predetermined level (the level corresponding to the midpoint of the precision that the signal carries; for example, if the signal has an 8 bit precision, then level 128) until the decoding is accomplished correctly; it also outputs the predetermined level signal by detecting an error propagated portion. The second high efficiency encoder 104 applies second prescribed decoding to the input low resolution bit stream for output, and outputs the decoded signal. The resolution converter 105 converts the low resolution decoded signal into a high resolution signal for output.

When the switch control signal indicates that the low resolution bit stream and the high resolution bit stream have been separated, the switch 106 adds the output of the first high efficiency encoder 601 and the output of the resolution converter 105 pixel by pixel and outputs the high resolution video signal; on the other hand, when the switch control signal indicates that only one video signal bit stream has been output, the output of the first high efficiency encoder 601 is directly output as the video signal.

With the provision of the first high efficiency decoder 601, if an error has occurred in the high resolution bit stream, the sixth invention of the present application can correct the errored portion, as well as error propagated portions, by using the resolution converted version of the low resolution bit stream decoded signal.

### (Embodiment 7)

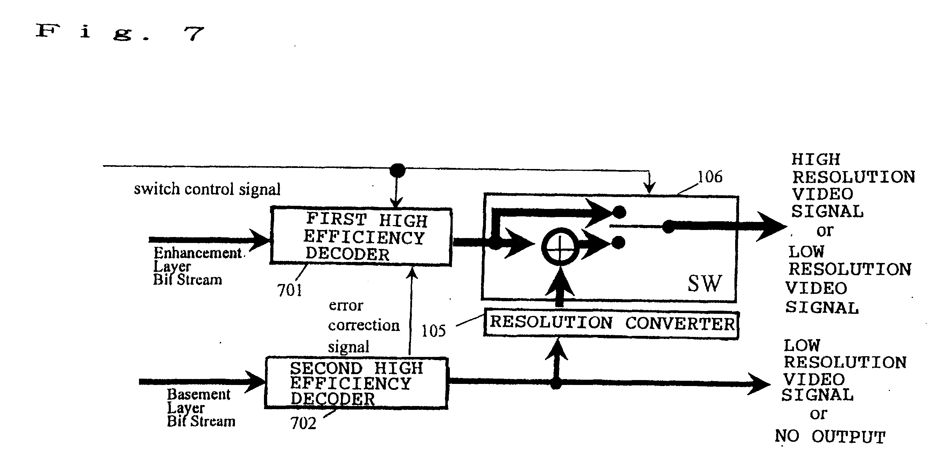

An embodiment for carrying out a seventh invention of the present application will be described below with reference to Figure 7.

Explanation of components in Figure 7 that are identical to those shown in Figure 1 will not be repeated here. In Figure 7, reference numeral 701 is a first high efficiency decoder and 702 is a second high efficiency decoder.

The first high efficiency decoder 701 applies fifth prescribed decoding to the input high resolution bit stream, and outputs the decoded signal. In performing this decoding when the switch control signal indicates that the low resolution bit stream and the high resolution bit stream have been separated, if an error is detected in the high resolution bit stream, the first high efficiency decoder 701 obtains from the second high efficiency decoder 702 the coding information (motion vector, etc.) carried in the low resolution bit stream near the errored portion in the reproduced video signal on the screen, and performs error correction using the obtained coding information until the decoding is accomplished correctly.

The sixth high efficiency encoder 702 applies sixth prescribed decoding to the input low resolution bit stream for output, and outputs the decoded signal, while also outputting the coding information necessary for the first high efficiency decoder 701 to obtain the coding information. The resolution converter 105 converts the low resolution decoded signal into a high resolution signal for output.

When the switch control signal indicates that the low resolution bit stream and the high resolution bit stream have been separated, the switch 106 adds the output of the first high efficiency encoder 701 and the output of the resolution converter 105 pixel by pixel and outputs the high resolution video signal; on the other hand, when the switch control signal indicates that only one video signal bit stream has been output, the output of the first high efficiency encoder 701 is directly output as the video signal.

With the provision of the first high efficiency decoder 701 and the second high efficiency decoder 702, if an error has occurred in the high resolution bit stream, the seventh invention of the present application can perform highly precise error correction by obtaining the coding information of the errored portion from the low resolution bit stream.

### (Embodiment 8)

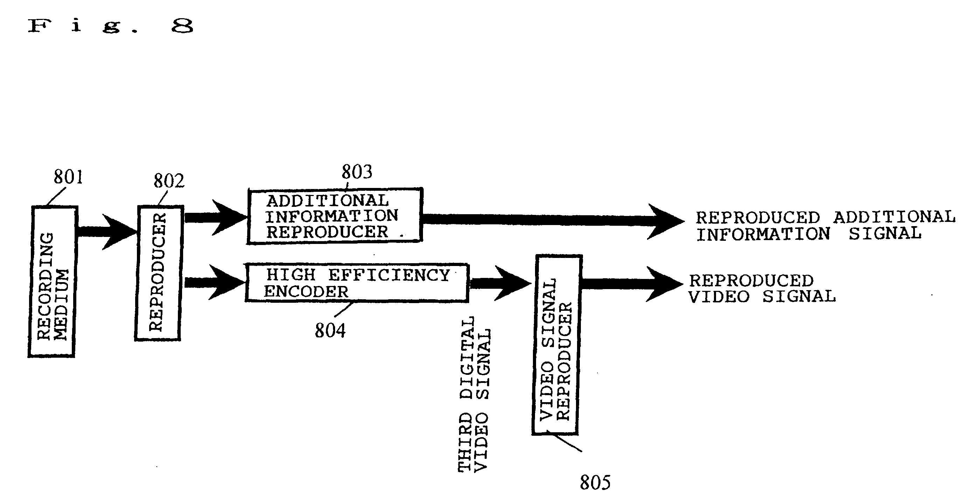

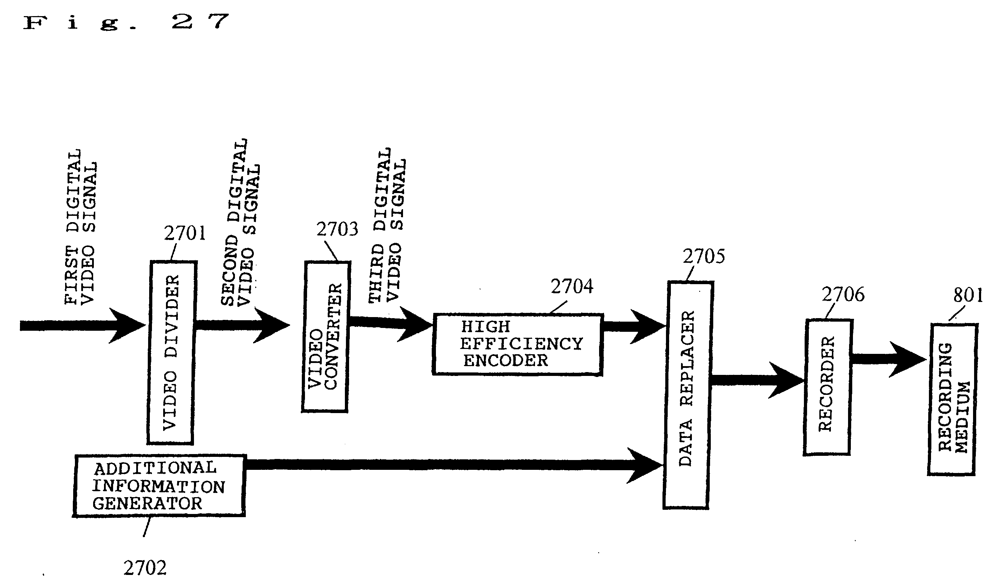

An embodiment for carrying out an eighth invention of the present application will be described below with reference to Figures 8 and 27.

In Figure 8, reference numeral 801 is a recording medium, 802 is a reproducer, 803 is an additional information reproducer, 804 is a high efficiency decoder, and 805 is a video signal reproducer, while in Figure 27, reference numeral 2701 is a video signal divider, 2702 is an additional information generator, 2703 is a video signal converter, 2704 is a high efficiency encoder, 2705 is a data replacer, and 2706 is a recorder.

First, the recording medium that the eighth invention of the present application intends to play back will be described with reference to Figure 27. Figure 27 shows a video signal recording apparatus which makes recordings on the recording medium that the eighth invention of the present application intends to play back. The video signal divider 2701 divides a first digital video signal input thereto into a second digital video signal representing a valid region and digital video signals for other regions than the valid region, and outputs the second digital video signal.

The additional information generator 2702 generates additional information data. The video signal converter 2703 converts the second digital video signal into a third digital video signal by adding a dummy signal.

The high efficiency encoder 2704 applies prescribed high efficiency encoding to the third digital video signal to create compressed data for output.

The data replacer 2705 replaces the data contained in the compressed data at the position corresponding to the information of the dummy signal by the additional information data.

The recorder 2706 records the compressed data processed by the data replacer 2705 onto a prescribed recording medium 801.

Next, the eighth invention of the present application will be described with reference to Figure 8. The reproducer 802 reproduces the compressed bit stream recorded on the recording medium 801 and outputs it to the high efficiency decoder 804, while also outputting to the additional information reproducer 803 the additional information data recorded at the designated position in the compressed bit stream.

The additional information reproducer 803 reproduces the additional information signal from the additional information data and outputs the reproduced signal.

The high efficiency decoder 804 applies decoding, an inverse process of the prescribed high efficiency encoding, to the compressed bit stream, and outputs a video signal. The video signal reproducer 805 outputs a reproduced video signal by reordering the video signal output from the high efficiency decoder 804.

With the provision of the reproducer 802 and the additional information reproducer 803, the eighth invention of the present application is able to reproduce the additional information recorded at the designated position in the compressed bit stream.

### (Embodiment 9)

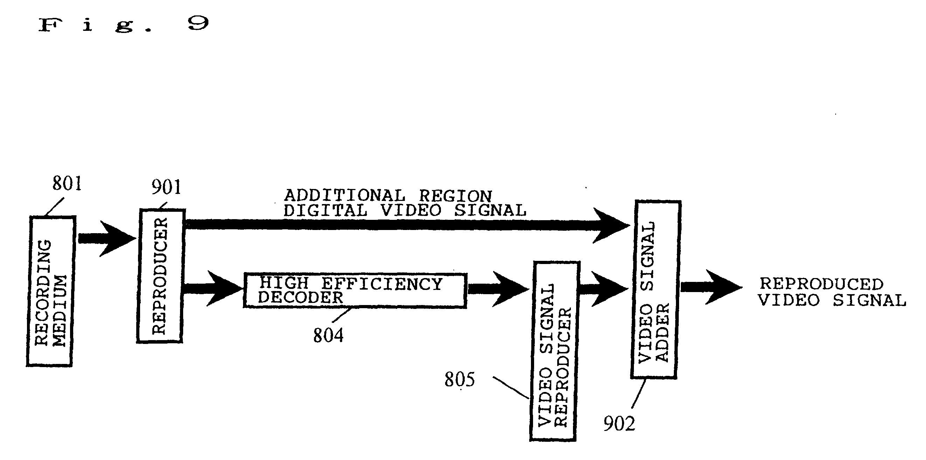

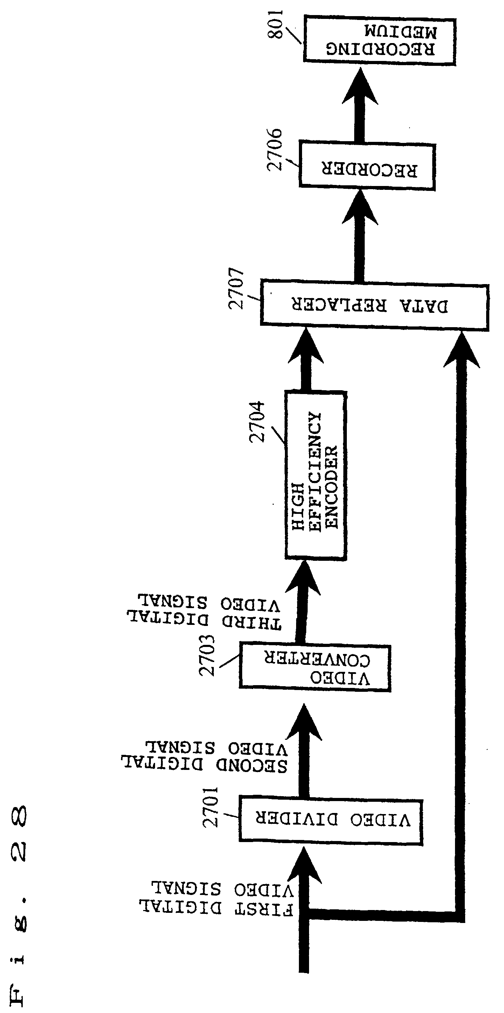

An embodiment for carrying out a ninth invention of the present application will be described below with reference to Figures 9 and 28. Explanation of components in Figure 9 that are identical to those shown in Figure 8 will not be repeated here. In Figure 9, reference numeral 901 is a reproducer, and 902 is a video signal adder. Explanation of components in Figure 28 that are identical to those shown in Figure 27 will not be repeated here. In Figure 28, reference numeral 2707 is a data replacer. First, the recording medium that the ninth invention of the present application intends to play back will be described with reference to Figure 28.

Figure 28 shows a video signal recording apparatus which makes recordings on the recording medium that the ninth invention of the present application intends to play back. The video signal divider 2701 divides a first digital video signal input thereto into a second digital video signal representing a valid region and digital video signals for other regions than the valid region, and outputs the second digital video signal. The video signal converter 2703 converts the second digital video signal into a third digital video signal by adding a dummy signal. The high efficiency encoder 2704 applies prescribed high efficiency encoding to the third digital video signal to create compressed data for output.

The data replacer 2705 replaces the data contained in the compressed data at the position corresponding to the information of the dummy signal by digital video signal data selected from among the digital video signals representing the other regions than the valid region. The recorder 2706 records the compressed data processed by the data replacer 2705 onto a prescribed recording medium 801.

Next, the ninth invention of the present application will be described with reference to Figure 9.

The reproducer 901 reproduces the compressed bit stream recorded on the recording medium 801 and outputs it to the high efficiency decoder 804, while also outputting the digital video signal that was selected from among the other-than-the-valid-region digital video signals and recorded at the designated position in the compressed bit stream. The high efficiency decoder 804 applies decoding, an inverse process of the prescribed high efficiency encoding, to the compressed bit stream, and outputs a video signal.

The video signal reproducer 805 outputs a reproduced video signal by reordering the video signal output from the high efficiency decoder 804.

The video signal adder 902 outputs a reproduced video signal by adding the digital video signal, output from the reproducer 901, at a designated position in the reproduced video signal output from the video signal reproducer 805.

With the provision of the reproducer 901 and the video signal adder 902, the ninth invention of the present application is able to reproduce the video signal containing the additional digital video signal recorded at the designated position in the compressed bit stream.

### (Embodiment 10)

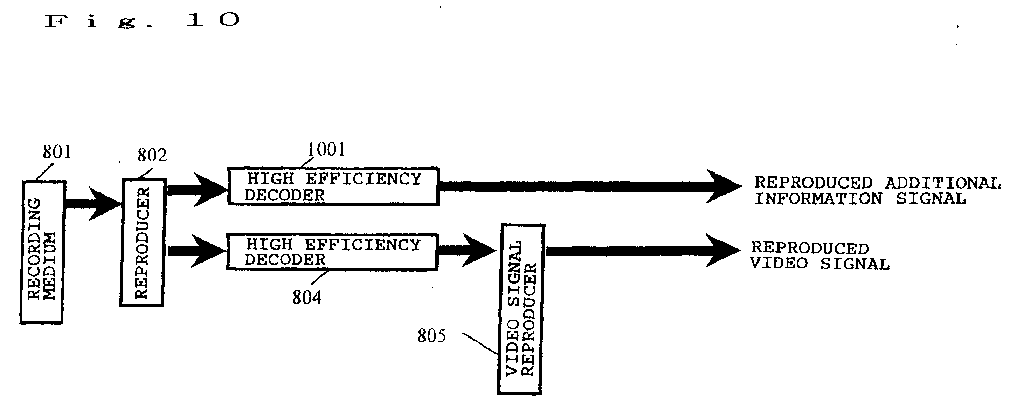

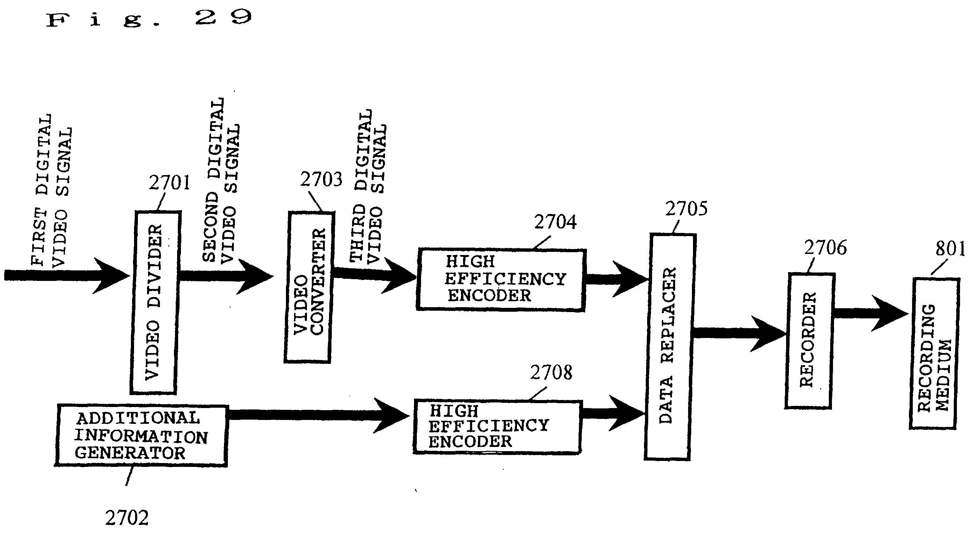

An embodiment for carrying out a 10th invention of the present application will be described below with reference to Figures 10 and 29.

Explanation of components in Figure 10 that are identical to those shown in Figure 8 will not be repeated here. In Figure 10, reference numeral 1001 is a high efficiency decoder. Explanation of components in Figure 29 that are identical to those shown in Figure 27 will not be repeated here. In Figure 29, reference numeral 2708 is a high efficiency encoder.

First, the recording medium that the 10th invention of the present application intends to play back will be described with reference to Figure 29. Figure 29 shows a video signal recording apparatus which makes recordings on the recording medium that the 10th invention of the present application intends to play back. The video signal divider 2701 divides a first digital video signal input thereto into a second digital video signal representing a valid region and digital video signals for other regions than the valid region, and outputs the second digital video signal. The additional information generator 2702 generates additional information data. The video signal converter 2703 converts the second digital video signal into a third digital video signal by adding a dummy signal.

The high efficiency encoder 2704 applies prescribed first high efficiency encoding to the third digital video signal to create compressed data for output. The high efficiency encoder 2708 applies prescribed second high efficiency encoding to the additional information data generated by the additional information generator 2702, to create additional information compressed data for output. The data replacer 2705 replaces the data contained in the compressed data at the position corresponding to the information of the dummy signal by the additional information compressed data output from the high efficiency encoder 2708. The recorder 2706 records the compressed data processed by the data replacer 2705 onto a prescribed recording medium 801.

Next, the 10th invention of the present application will be described with reference to Figure 10.

The reproducer 802 reproduces the compressed bit stream recorded on the recording medium 801 and outputs it to the high efficiency decoder 804, while also outputting to the high efficiency decoder 1001 the additional information compressed data recorded at the designated position in the compressed bit stream.

The high efficiency decoder 1001 applies decoding, an inverse process of the prescribed second high efficiency encoding, to the additional information compressed data, and thereby reproduces the additional information signal for output. The high efficiency decoder 804 applies decoding, an inverse process of the prescribed first high efficiency encoding, to the compressed bit stream, and outputs a video signal. The video signal reproducer 805 outputs a reproduced video signal by reordering the video signal output from the high efficiency decoder 804.

With the provision of the high efficiency decoder 1001, the 10th invention of the present application is able to reproduce the additional information compressed by a prescribed compression scheme and recorded at the designated position in the compressed bit stream.

### (Embodiment 11)

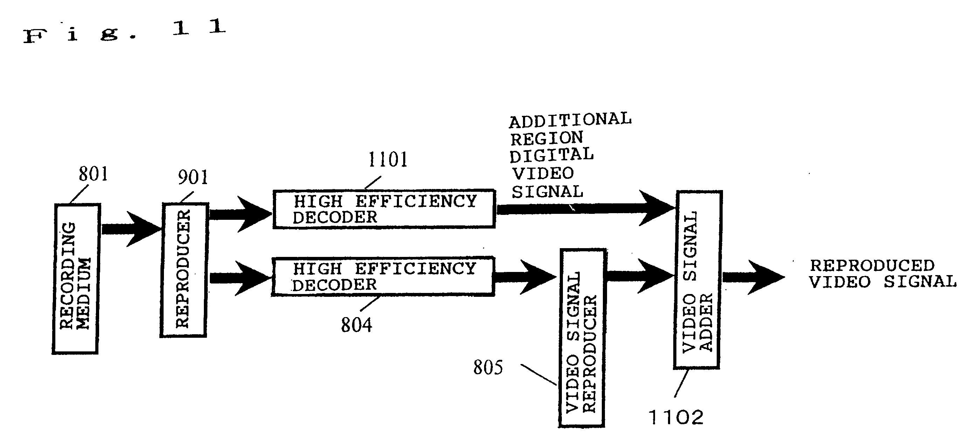

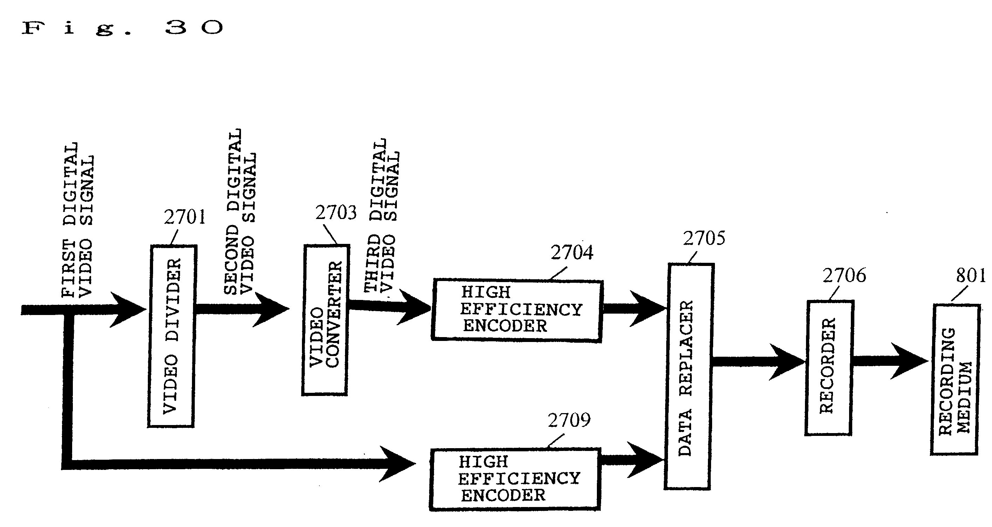

An embodiment for carrying out an 11th invention of the present application will be described below with reference to Figures 11 and 30.

Explanation of components in Figure 30 that are identical to those shown in Figure 27 will not be repeated here. In Figure 30, reference numeral 2709 is a high efficiency encoder. Explanation of components in Figure 11 that are identical to those shown in Figure 8 or 9 will not be repeated here. In Figure 11, reference numeral 1101 is a high efficiency decoder and 1102 is a video signal adder.

First, the recording medium that the 11th invention of the present application intends to play back will be described with reference to Figure 30. Figure 30 shows a video signal recording apparatus which makes recordings on the recording medium that the 11th invention of the present application intends to play back. The video signal divider 2701 divides a first digital video signal input thereto into a second digital video signal representing a valid region and digital video signals for other regions than the valid region, and outputs the second digital video signal. The video signal converter 2703 converts the second digital video signal into a third digital video signal by adding a dummy signal. The high efficiency encoder 2704 applies prescribed first high efficiency encoding to the third digital video signal to create compressed data for output.

The high efficiency encoder 2709 applies prescribed second high efficiency encoding to digital video signal data selected from among the digital video signals representing the other regions than the valid region in the first digital video signal, and thereby creates second compressed data for output.

The data replacer 2705 replaces the data contained in the compressed data at the position corresponding to the information of the dummy signal by the second compressed data output from the high efficiency encoder 2708. The recorder 2706 records the compressed data processed by the data replacer 2705 onto a prescribed recording medium 801.

Next, the 11th invention of the present application will be described with reference to Figure 11. The reproducer 901 reproduces the compressed bit stream recorded on the recording medium 801 and outputs it to the high efficiency decoder 804, while also outputting to the high efficiency decoder 1101 the second compressed data recorded at the designated position in the compressed bit stream.

The high efficiency decoder 1101 applies decoding, an inverse process of the prescribed second high efficiency encoding, to the second compressed data, and thereby reproduces and outputs the digital video signal selected from among the digital video signals representing the other regions than the valid region in the first digital video signal.

The high efficiency decoder 804 applies decoding, an inverse process of the prescribed first high efficiency encoding, to the compressed bit stream, and outputs a video signal. The video signal reproducer 805 outputs a reproduced video signal by reordering the video signal output from the high efficiency decoder 804.

The video signal adder 902 outputs a reproduced video signal by adding the digital video signal data selected from among the digital video signals representing the other regions than the valid region in the first digital video signal, at a designated position in the reproduced video signal output from the video signal reproducer 805.

With the provision of the high efficiency decoder 1101 and the video signal adder 1102, the 11th invention of the present application is able to reproduce the video signal containing an additional region digital video signal compressed by a prescribed compression scheme and recorded at the designated position in the compressed bit stream.

### (Embodiment 12)

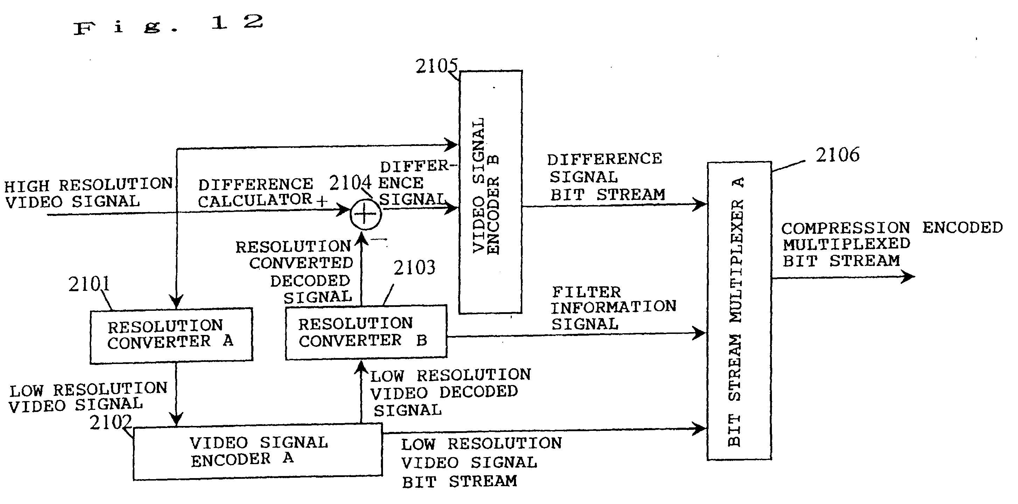

An embodiment of a layered video signal encoding apparatus according to a 12th invention of the present application will be described below with reference to Figure 12.

In Figure 12, reference numeral 2101 is a resolution converter A, 2102 is a video signal encoder A, 2103 is a resolution converter B, 2104 is a difference calculator, 2105 is a video signal encoder B, and 2106 is a bit stream multiplexer A.

The high resolution video signal input into the resolution converter A 2101 is resolution converted and output as a low resolution video signal. The video signal encoder A 2102 outputs a low resolution video signal bit stream by encoding the low resolution video signal using a prescribed video signal compression encoding scheme A, and also outputs a low resolution video decoded signal by decoding the low resolution video signal bit stream. The resolution converter B 2103 outputs a resolution converted decoded signal by resolution converting the low resolution video decoded signal to the same resolution as the input high resolution video signal by using filters horizontally and vertically, and also outputs a filter information signal which at least includes information on the number of taps and the coefficients of the horizontal filter and the number of taps and the coefficients of the vertical filter. The difference calculator 2104 outputs a difference signal representing the pixel by pixel difference between the input high resolution video signal and the resolution converted decoded signal output from the resolution converter B 2103. The video signal encoder B 2105 outputs a difference signal bit stream by encoding the difference signal using a prescribed video signal compression encoding scheme B.

The bit stream multiplexer A 2106 outputs a compression encoded multiplexed bit stream by multiplexing together the filter information signal, the low resolution video signal bit stream, and the difference signal bit stream. The multiplexing of the filter information signal in the bit stream multiplexer A 2106 will be explained below by way of an example.

When the video signal compression encoding scheme A and the video signal compression encoding scheme B are both MPEG standard compression schemes, with the low resolution video signal bit stream and the difference signal bit stream both having the elementary stream syntax defined by MPEG, and when the bit stream multiplexer A 2106 outputs the compression encoded multiplexed bit stream as a bit stream conforming to the transport stream syntax defined by MPEG, then the filter information signal is added as a user defined stream to a PMT (Program Map Table), and the filter information signal itself is multiplexed as a single elementary stream into the compression encoded multiplexed bit stream.

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

Further, the filter information signal may be tabulated, and only the number indicating the contents of the table may be transmitted. For the filter information signal, the same information may be transmitted a plurality of times considering transmission errors.

In the resolution conversion performed by the resolution converter B 2103, the phase that can be converted may be limited both horizontally and vertically. In that case, if the ratio of the horizontal pixel count of the high resolution video signal to the horizontal pixel count of the low resolution video signal or the ratio of the vertical line count of the high resolution video signal to the vertical line count of the low resolution video signal is one that cannot be achieved, then the resolution conversion may be done with the closest possible phase within the achievable range, in which case the number of taps and the coefficients of the horizontal filter and the number of taps and the coefficients of the vertical filter at that time can be transmitted as the filter information signal.

Further, MPEG standard compression may be used for both the video signal compression encoding scheme A and the video signal compression encoding scheme B.

When the video signal compression encoding scheme B in the video signal encoder B is one that encodes a difference signal taken with respect to a temporally predicted image, the input high resolution video signal may be used for the generation of the predicted image.

### (Embodiment 13)

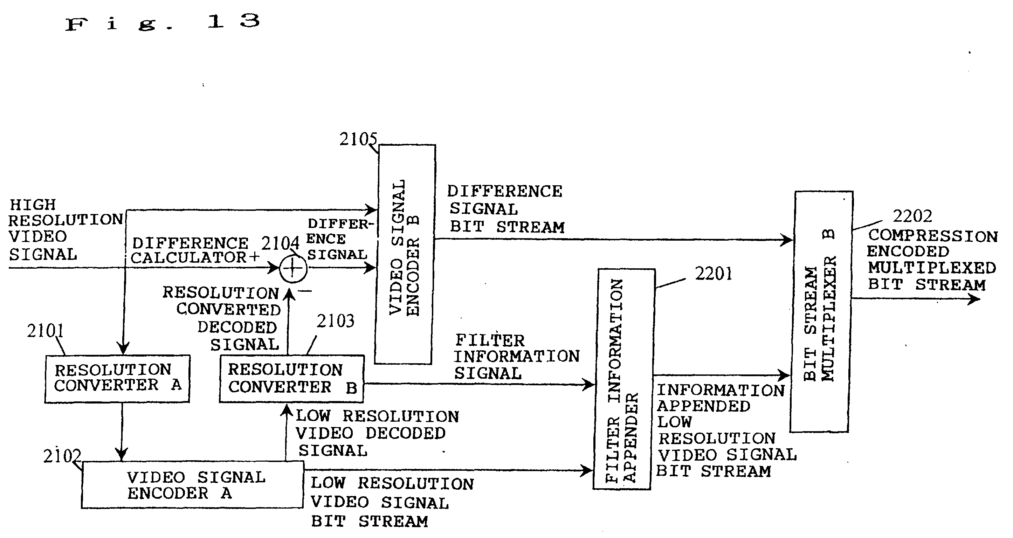

An embodiment of a layered video signal encoding apparatus according to a 13th invention of the present application will be described below with reference to Figure 13.

Explanation of components in Figure 13 that are identical to those shown in Figure 12 will not be repeated here. Reference numeral 2201 is a filter information appender and 2202 is a bit stream multiplexer B.

The high resolution video signal input into the resolution converter A 2101 is resolution converted and output as a low resolution video signal. The video signal encoder A 2102 outputs a low resolution video signal bit stream by encoding the low resolution video signal using a prescribed video signal compression encoding scheme A, and also outputs a low resolution video decoded signal by decoding the low resolution video signal bit stream. The resolution converter B 2103 outputs a resolution converted decoded signal by resolution converting the low resolution video decoded signal to the same resolution as the input high resolution video signal by using filters horizontally and vertically, and also outputs a filter information signal which at least includes information on the number of taps and the coefficients of the horizontal filter and the number of taps and the coefficients of the vertical filter. The difference calculator 2104 outputs a difference signal representing the pixel by pixel difference between the input high resolution video signal and the resolution converted decoded signal output from the resolution converter B 2103. The video signal encoder B 2105 outputs a difference signal bit stream by encoding the difference signal using a prescribed video signal compression encoding scheme B.

The filter information appender 2201 outputs an information appended low resolution video signal bit stream by appending the filter information signal as user data to the low resolution video signal bit stream. The bit stream multiplexer B 2202 outputs a compression encoded multiplexed bit stream by multiplexing the information appended low resolution video signal bit stream with the difference signal bit stream.

The appending of the filter information signal in the filter information appender 2201 will be explained below by way of an example.

When the video signal compression encoding scheme A is an MPEG standard compression scheme, with the low resolution video signal bit stream having the elementary stream syntax defined by MPEG, the filter information appender 201 appends the filter information signal as user data in the sequence header in the low resolution video signal bit stream by using ESC (ExtensionStartcode) and UDSC (UserDataStartCode).

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

Further, the filter information signal may be tabulated, and only the number indicating the contents of the table may be transmitted. For the filter information signal, the same information may be transmitted a plurality of times considering transmission errors. In the resolution conversion performed by the resolution converter B 2103, the phase that can be converted may be limited both horizontally and vertically.

In that case, if the ratio of the horizontal pixel count of the high resolution video signal to the horizontal pixel count of the low resolution video signal or the ratio of the vertical line count of the high resolution video signal to the vertical line count of the low resolution video signal is one that cannot be achieved, then the resolution conversion may be done with the closest possible phase within the achievable range, in which case the number of taps and the coefficients of the horizontal filter and the number of taps and the coefficients of the vertical filter at that time can be transmitted as the filter information signal.

Further, MPEG standard compression may be used for both the video signal compression encoding scheme A and the video signal compression encoding scheme B.

When the video signal compression encoding scheme B in the video signal encoder B is one that encodes a difference signal taken with respect to a temporally predicted image, the input high resolution video signal may be used for the generation of the predicted image.

### (Embodiment 14)

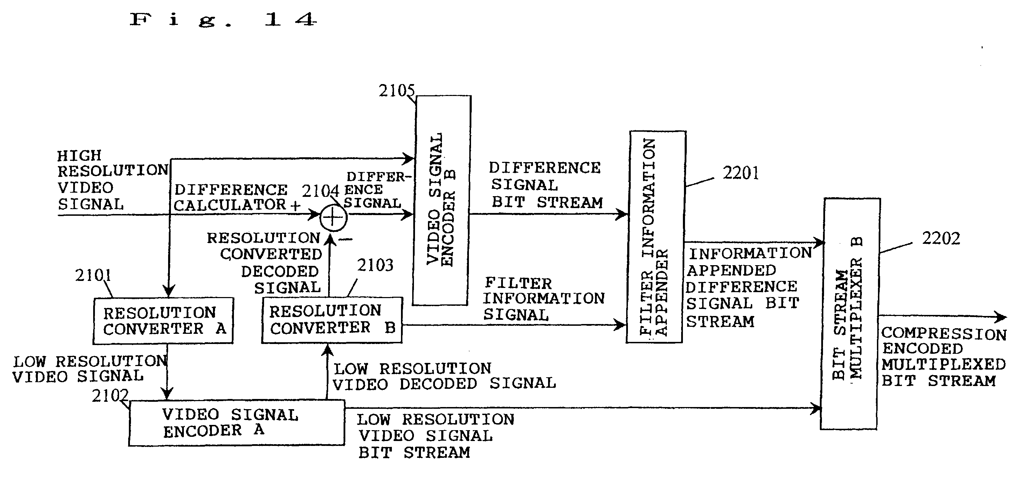

An embodiment of a layered video signal encoding apparatus according to a 14th invention of the present application will be described below with reference to Figure 14.

The high resolution video signal input into the resolution converter A 2101 is resolution converted and output as a low resolution video signal. The video signal encoder A 2102 outputs a low resolution video signal bit stream by encoding the low resolution video signal using a prescribed video signal compression encoding scheme A, and also outputs a low resolution video decoded signal by decoding the low resolution video signal bit stream.

The resolution converter B 2103 outputs a resolution converted decoded signal by resolution converting the low resolution video decoded signal to the same resolution as the input high resolution video signal by using filters horizontally and vertically, and also outputs a filter information signal which at least includes information on the number of taps and the coefficients of the horizontal filter and the number of taps and the coefficients of the vertical filter.

The difference calculator 2104 outputs a difference signal representing the pixel by pixel difference between the input high resolution video signal and the resolution converted decoded signal output from the resolution converter B 103. The video signal encoder B 2105 outputs a difference signal bit stream by encoding the difference signal using a prescribed video signal compression encoding scheme B.

The filter information appender 2201 outputs an information appended difference signal bit stream by appending the filter information signal as user data to the difference signal bit stream. The bit stream multiplexer B 2202 outputs a compression encoded multiplexed bit stream by multiplexing the information appended difference signal bit stream with the low resolution video signal bit stream. The appending of the filter information signal in the filter information appender 2201 will be explained below by way of an example.

When the video signal compression encoding scheme B is an MPEG standard compression scheme, with the low resolution video signal bit stream having the elementary stream syntax defined by MPEG, the filter information appender 2201 appends the filter information signal as user data in the sequence header in the low resolution video signal bit stream by using ESC (ExtensionStartcode) and UDSC (UserDataStartCode).

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

Further, the filter information signal may be tabulated, and only the number indicating the contents of the table may be transmitted. For the filter information signal, the same information may be transmitted a plurality of times considering transmission errors. In the resolution conversion performed by the resolution converter B 2103, the phase that can be converted may be limited both horizontally and vertically.

In that case, if the ratio of the horizontal pixel count of the high resolution video signal to the horizontal pixel count of the low resolution video signal or the ratio of the vertical line count of the high resolution video signal to the vertical line count of the low resolution video signal is one that cannot be achieved, then the resolution conversion may be done with the closest possible phase within the achievable range, in which case the number of taps and the coefficients of the horizontal filter and the number of taps and the coefficients of the vertical filter at that time can be transmitted as the filter information signal.

Further, MPEG standard compression may be used for both the video signal compression encoding scheme A and the video signal compression encoding scheme B.

When the video signal compression encoding scheme B in the video signal encoder B is one that encodes a difference signal taken with respect to a temporally predicted image, the input high resolution video signal may be used for the generation of the predicted image.

### (Embodiment 15)

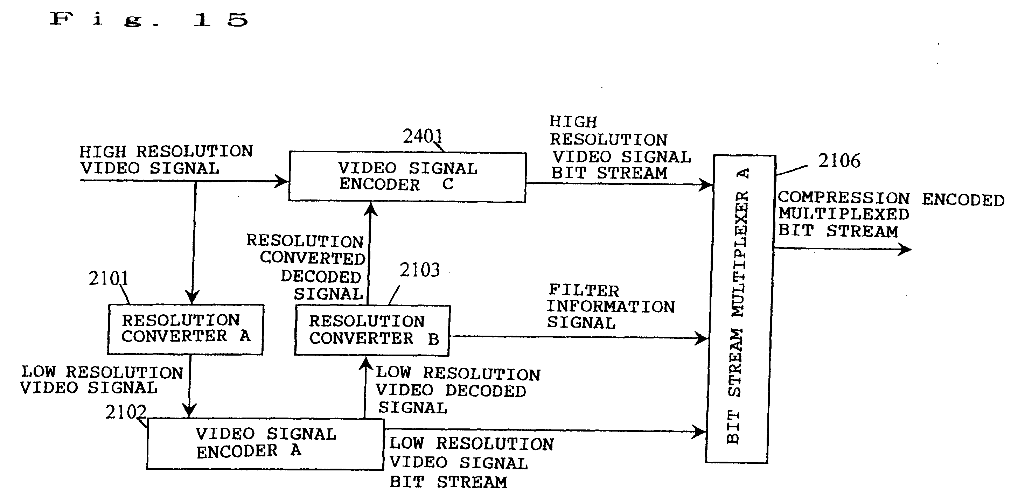

An embodiment of a layered video signal encoding apparatus according to a 15th invention of the present application will be described below with reference to Figure 15.

In Figure 15, reference numeral 2401 is a video signal encoder C. The high resolution video signal input into the resolution converter A 2101 is resolution converted and output as a low resolution video signal. The video signal encoder A 2102 outputs a low resolution video signal bit stream by encoding the low resolution video signal using a prescribed video signal compression encoding scheme A, and also outputs a low resolution video decoded signal by decoding the low resolution video signal bit stream.

The resolution converter B 2103 outputs a resolution converted decoded signal by resolution converting the low resolution video decoded signal to the same resolution as the input high resolution video signal by using filters horizontally and vertically, and also outputs a filter information signal which at least includes information on the number of taps and the coefficients of the horizontal filter and the number of taps and the coefficients of the vertical filter.

The video signal encoder C 2401 encodes the input high resolution video signal by a prescribed video signal compression encoding scheme C using a predicted image, wherein a spatially predicted image is generated from the resolution converted decoded signal and a temporally predicted image from an image decoded from the already encoded high resolution video signal and, by using the spatially predicted image and temporally predicted image, the predicted image is generated for each encoded unit that contains at least one pixel video signal, and wherein a difference signal taken between the input high resolution video signal and the predicted image is compression encoded by the video signal compression encoding scheme C and output as a high resolution video signal bit stream.

The bit stream multiplexer A 2106 outputs a compression encoded multiplexed bit stream by multiplexing together the filter information signal, the low resolution video signal bit stream, and the high resolution video signal bit stream. The multiplexing of the filter information signal in the bit stream multiplexer 2202 will be explained below by way of an example.

When the video signal compression encoding scheme A and the video signal compression encoding scheme C are both MPEG standard compression schemes, with the low resolution video signal bit stream and the difference signal bit stream both having the elementary stream syntax defined by MPEG, and when the bit stream multiplexer A 106 outputs the compression encoded multiplexed bit stream as a bit stream conforming to the transport stream syntax defined by MPEG, then the filter information signal is added as a user defined stream to a PMT (Program Map Table), and the filter information signal itself is multiplexed as a single elementary stream into the compression encoded multiplexed bit stream.

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

Further, the filter information signal may be tabulated, and only the number indicating the contents of the table may be transmitted. For the filter information signal, the same information may be transmitted a plurality of times considering transmission errors. In the resolution conversion performed by the resolution converter B 2103, the phase that can be converted may be limited both horizontally and vertically.

In that case, if the ratio of the horizontal pixel count of the high resolution video signal to the horizontal pixel count of the low resolution video signal or the ratio of the vertical line count of the high resolution video signal to the vertical line count of the low resolution video signal is one that cannot be achieved, then the resolution conversion may be done with the closest possible phase within the achievable range, in which case the number of taps and the coefficients of the horizontal filter and the number of taps and the coefficients of the vertical filter at that time can be transmitted as the filter information signal.

Further, MPEG standard compression may be used for both the video signal compression encoding scheme A and the video signal compression encoding scheme C.

The video signal compression encoding scheme C in the video signal encoder C may employ MPEG2 Spatial Scalable Profile compression, and the predicted image may use the midpoint value of the bit precision per pixel (for example, if the bit precision is 8 bits, then 128).

### (Embodiment 16)

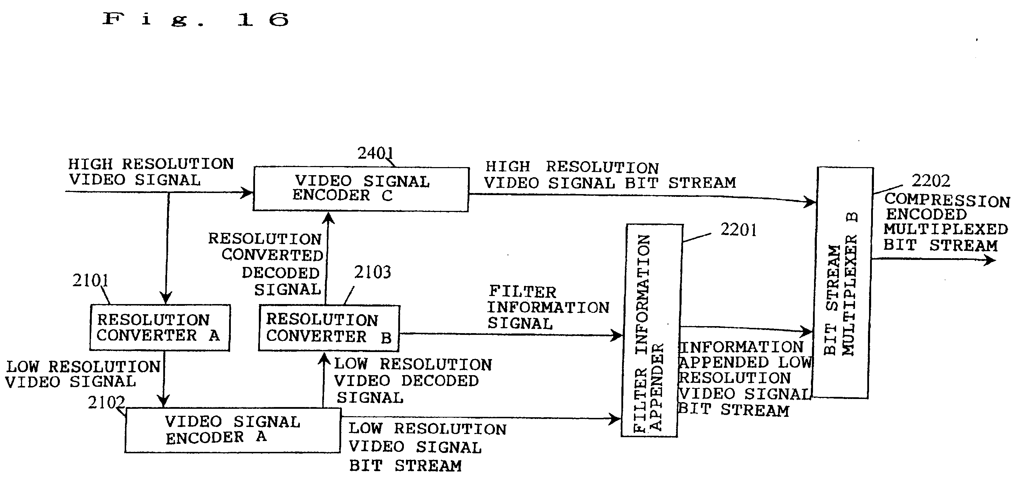

An embodiment of a layered video signal encoding apparatus according to a 16th invention of the present application will be described below with reference to Figure 16.

The high resolution video signal input into the resolution converter A 2101 is resolution converted and output as a low resolution video signal. The video signal encoder A 2102 outputs a low resolution video signal bit stream by encoding the low resolution video signal using a prescribed video signal compression encoding scheme A, and also outputs a low resolution video decoded signal by decoding the low resolution video signal bit stream. The resolution converter B 2103 outputs a resolution converted decoded signal by resolution converting the low resolution video decoded signal to the same resolution as the input high resolution video signal by using filters horizontally and vertically, and also outputs a filter information signal which at least includes information on the number of taps and the coefficients of the horizontal filter and the number of taps and the coefficients of the vertical filter. The video signal encoder C 2401 encodes the input high resolution video signal by a prescribed video signal compression encoding scheme C using a predicted image, wherein a spatially predicted image is generated from the resolution converted decoded signal and a temporally predicted image from an image decoded from the already encoded high resolution video signal and, by using the spatially predicted image and temporally predicted image, the predicted image is generated for each encoded unit that contains at least one pixel video signal, and wherein a difference signal taken between the input high resolution video signal and the predicted image is compression encoded by the video signal compression encoding scheme C and output as a high resolution video signal bit stream. The filter information appender 2201 outputs an information appended low resolution video signal bit stream by appending the filter information signal as user data to the low resolution video signal bit stream. The bit stream multiplexer B 2202 outputs a compression encoded multiplexed bit stream by multiplexing the information appended low resolution video signal bit stream with the high resolution video signal bit stream.

The appending of the filter information signal in the filter information appender 2201 will be explained below by way of an example.

When the video signal compression encoding scheme A is an MPEG standard compression scheme, with the low resolution video signal bit stream having the elementary stream syntax defined by MPEG, the filter information appender 201 appends the filter information signal as user data in the sequence header in the low resolution video signal bit stream by using ESC (ExtensionStartcode) and UDSC (UserDataStartCode).

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

Further, the filter information signal may be tabulated, and only the number indicating the contents of the table may be transmitted.

For the filter information signal, the same information may be transmitted a plurality of times considering transmission errors. In the resolution conversion performed by the resolution converter B 2103, the phase that can be converted may be limited both horizontally and vertically.

In that case, if the ratio of the horizontal pixel count of the high resolution video signal to the horizontal pixel count of the low resolution video signal or the ratio of the vertical line count of the high resolution video signal to the vertical line count of the low resolution video signal is one that cannot be achieved, then the resolution conversion may be done with the closest possible phase within the achievable range, in which case the number of taps and the coefficients of the horizontal filter and the number of taps and the coefficients of the vertical filter at that time can be transmitted as the filter information signal.

Further, MPEG standard compression may be used for both the video signal compression encoding scheme A and the video signal compression encoding scheme C.

The video signal compression encoding scheme C in the video signal encoder C may employ MPEG2 Spatial Scalable Profile compression, and the predicted image may use the midpoint value of the bit precision per pixel (for example, if the bit precision is 8 bits, then 128).

### (Embodiment 17)

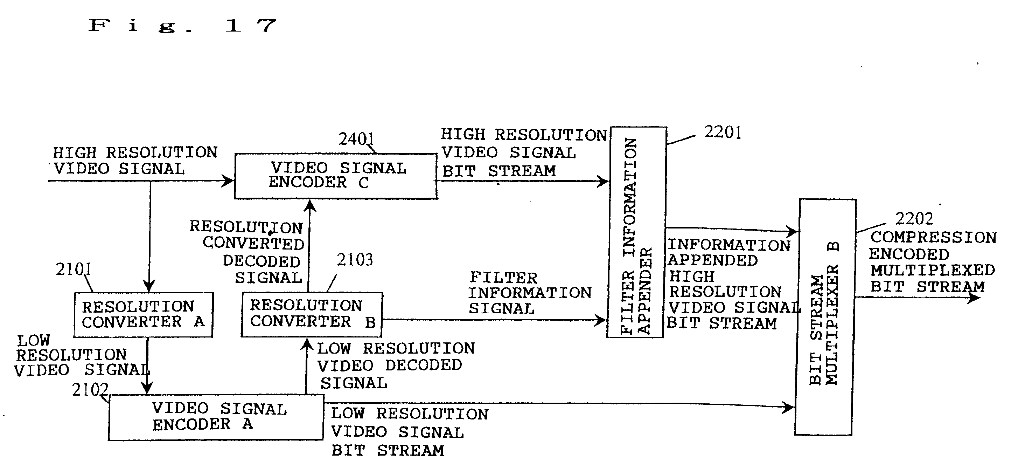

An embodiment of a layered video signal encoding apparatus according to a 17th invention of the present application will be described below with reference to Figure 17.

The high resolution video signal input into the resolution converter A 2101 is resolution converted and output as a low resolution video signal. The video signal encoder A 2102 outputs a low resolution video signal bit stream by encoding the low resolution video signal using a prescribed video signal compression encoding scheme A, and also outputs a low resolution video decoded signal by decoding the low resolution video signal bit stream. The resolution converter B 2103 outputs a resolution converted decoded signal by resolution converting the low resolution video decoded signal to the same resolution as the input high resolution video signal by using filters horizontally and vertically, and also outputs a filter information signal which at least includes information on the number of taps and the coefficients of the horizontal filter and the number of taps and the coefficients of the vertical filter. The video signal encoder C 2401 encodes the input high resolution video signal by a prescribed video signal compression encoding scheme C using a predicted image, wherein a spatially predicted image is generated from the resolution converted decoded signal and a temporally predicted image from an image decoded from the already encoded high resolution video signal and, by using the spatially predicted image and the temporally predicted image, the predicted image is generated for each encoded unit that contains at least one pixel video signal, and wherein a difference signal taken between the input high resolution video signal and the predicted image is compression encoded by the video signal compression encoding scheme C and output as a high resolution video signal bit stream.

The filter information appender 2201 outputs an information appended high resolution video signal bit stream by appending the filter information signal as user data to the high resolution video signal bit stream. The bit stream multiplexer B 2202 outputs a compression encoded multiplexed bit stream by multiplexing the information appended high resolution video signal bit stream with the low resolution video signal bit stream.

The appending of the filter information signal in the filter information appender 2201 will be explained below by way of an example. When the video signal compression encoding scheme A is an MPEG standard compression scheme, with the low resolution video signal bit stream having the elementary stream syntax defined by MPEG, the filter information appender 2201 appends the filter information signal as user data in the sequence header in the low resolution video signal bit stream by using ESC (ExtensionStartcode) and UDSC (UserDataStartCode).

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

Further, the filter information signal may be tabulated, and only the number indicating the contents of the table may be transmitted.

For the filter information signal, the same information may be transmitted a plurality of times considering transmission errors. In the resolution conversion performed by the resolution converter B 2103, the phase that can be converted may be limited both horizontally and vertically. In that case, if the ratio of the horizontal pixel count of the high resolution video signal to the horizontal pixel count of the low resolution video signal or the ratio of the vertical line count of the high resolution video signal to the vertical line count of the low resolution video signal is one that cannot be achieved, then the resolution conversion may be done with the closest possible phase within the achievable range, in which case the number of taps and the coefficients of the horizontal filter and the number of taps and the coefficients of the vertical filter at that time can be transmitted as the filter information signal.

Further, MPEG standard compression may be used for both the video signal compression encoding scheme A and the video signal compression encoding scheme C. The video signal compression encoding scheme C in the video signal encoder C may employ MPEG2 Spatial Scalable Profile compression, and the predicted image may use the midpoint value of the bit precision per pixel (for example, if the bit precision is 8 bits, then 128). (Embodiment 18)

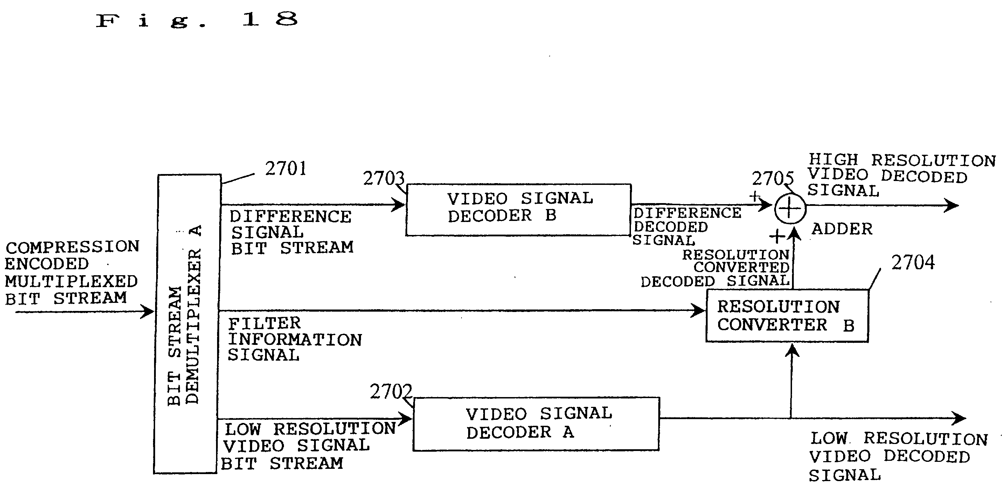

An embodiment of a layered video signal encoding apparatus according to an 18th invention of the present application will be described below with reference to Figure 18.

In Figure 18, reference numeral 2701 is a bit stream demultiplexer A, 2702 is a video signal decoder A, 703 is a video signal decoder B, 2104 is a resolution converter B, and 2705 is an adder.

The bit stream demultiplexer A 2701 demultiplexes the compression encoded multiplexed bit stream into the filter information signal, low resolution video signal bit stream, and difference signal bit stream for output. The video signal decoder A 2702 outputs a low resolution decoded video signal by decoding the low resolution video signal bit stream by performing an inverse of the prescribed video signal compression scheme A. The video signal decoder B 2703 outputs a difference decoded signal by decoding the difference signal bit stream by performing an inverse of the prescribed video signal compression scheme B.

The resolution converter B 2704 outputs a resolution converted signal by converting the resolution to the same resolution as the difference decoded signal by using the horizontal filter and vertical filter obtained from the filter information signal. The adder 2705 generates a high resolution decoded video signal by taking a pixel by pixel sum between the difference decoded signal and the resolution converted signal.

The demultiplexing of the filter information signal in the bit stream demultiplexer A 701 will be explained below by way of an example. When the video signal compression encoding scheme A and the video signal compression encoding scheme B are both MPEG standard compression schemes, with the low resolution video signal bit stream and the difference signal bit stream both having the elementary stream syntax defined by MPEG, and when the compression encoded multiplexed bit stream is output as a bit stream conforming to the transport stream syntax defined by MPEG, if the filter information signal has been added as a user defined stream to the PMT (Program Map Table), and the filter information signal itself has been multiplexed as a single elementary stream into the compression encoded multiplexed bit stream, then the filter information signal is demultiplexed as a single elementary stream.

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

In the resolution converter B 704, if the ideal phase obtained from the number of taps and the coefficients of the horizontal filter, the ratio of the horizontal pixel count of the high resolution video signal to the horizontal pixel count of the low resolution video signal, the number of taps and the coefficients of the vertical filter, and the ratio of the vertical line count of the high resolution video signal to the vertical line count of the low resolution video signal, which are carried in the input filter information signal, exceeds the processing capacity of the resolution converter B 704, the resolution converted signal may be generated with the closest possible phase within the processing capacity.

Further, when the filter information signal is tabulated, the number of taps and the coefficients of the horizontal filter, the number of taps and the coefficients of the vertical filter, the ratio of the horizontal pixel count of the high resolution video signal to the horizontal pixel count of the low resolution video signal, and the ratio of the vertical line count of the high resolution video signal to the vertical line count of the low resolution video signal may be obtained as the filter information signal from the table indicated by the received number.

Further, MPEG standard compression may be used for both the video signal compression encoding scheme A and the video signal compression encoding scheme B.

### (Embodiment 19)

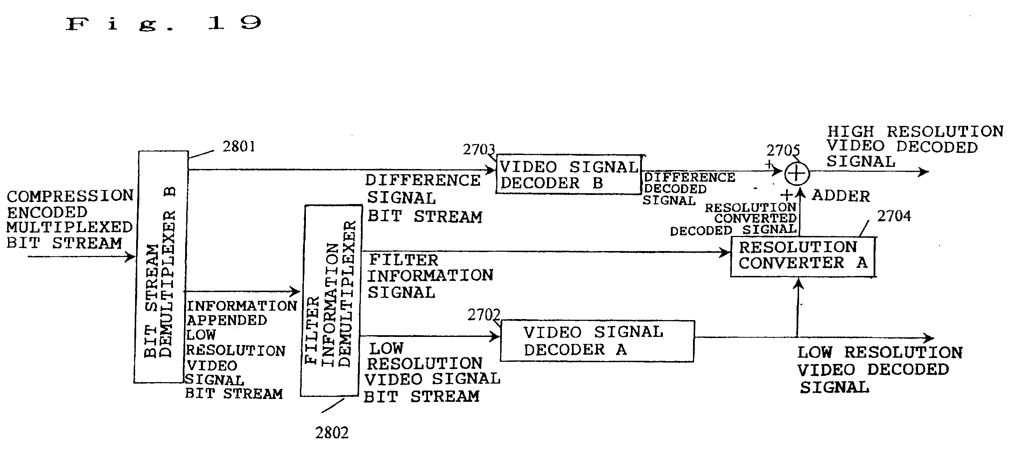

An embodiment of a layered video signal encoding apparatus according to a 19th invention of the present application will be described below with reference to Figure 19.

In Figure 19, reference numeral 2801 is a bit stream demultiplexer B and 2802 is a filter information demultiplexer. The bit stream demultiplexer B 2801 demultiplexes the compression encoded multiplexed bit stream into the information appended low resolution video signal bit stream and the difference signal bit stream for output. The filter information demultiplexer 2802 demultiplexes the information appended low resolution video signal bit stream into the filter information signal and the low resolution video signal bit stream for output. The video signal decoder A 2702 outputs a low resolution decoded video signal by decoding the low resolution video signal bit stream by performing an inverse of the prescribed video signal compression scheme A. The video signal decoder B 2703 outputs a difference decoded signal by decoding the difference signal bit stream by performing an inverse of the prescribed video signal compression scheme B. The resolution converter B 2704 outputs a resolution converted signal by converting the resolution to the same resolution as the difference decoded signal by using the horizontal filter and vertical filter obtained from the filter information signal. The adder 2705 generates a high resolution decoded video signal by taking a pixel by pixel sum between the difference decoded signal and the resolution converted signal.

The demultiplexing of the filter information signal in the filter information demultiplexer 2802 will be explained below by way of an example. When the video signal compression encoding scheme A is an MPEG standard compression scheme, with the low resolution video signal bit stream having the elementary stream syntax defined by MPEG, if the filter information signal has been appended as user data in the sequence header in the low resolution video signal bit stream by using ESC (ExtensionStartcode) and UDSC (UserDataStartCode), then the filter information demultiplexer 2802 extracts the filter information signal from the sequence header and outputs it independently; in this case, the information appended low resolution video signal bit stream may be output in its entirety as the low resolution video signal bit stream.

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

In the resolution converter B 2704, if the ideal phase obtained from the number of taps and the coefficients of the horizontal filter, the ratio of the horizontal pixel count of the high resolution video signal to the horizontal pixel count of the low resolution video signal, the number of taps and the coefficients of the vertical filter, and the ratio of the vertical line count of the high resolution video signal to the vertical line count of the low resolution video signal, which are carried in the input filter information signal, exceeds the processing capacity of the resolution converter B 704, the resolution converted signal may be generated with the closest possible phase within the processing capacity.

Further, when the filter information signal is tabulated, the number of taps and the coefficients of the horizontal filter, the number of taps and the coefficients of the vertical filter, the ratio of the horizontal pixel count of the high resolution video signal to the horizontal pixel count of the low resolution video signal, and the ratio of the vertical line count of the high resolution video signal to the vertical line count of the low resolution video signal may be obtained as the filter information signal from the table indicated by the received number.

Further, MPEG standard compression may be used for both the video signal compression encoding scheme A and the video signal compression encoding scheme B.

### (Embodiment 20)

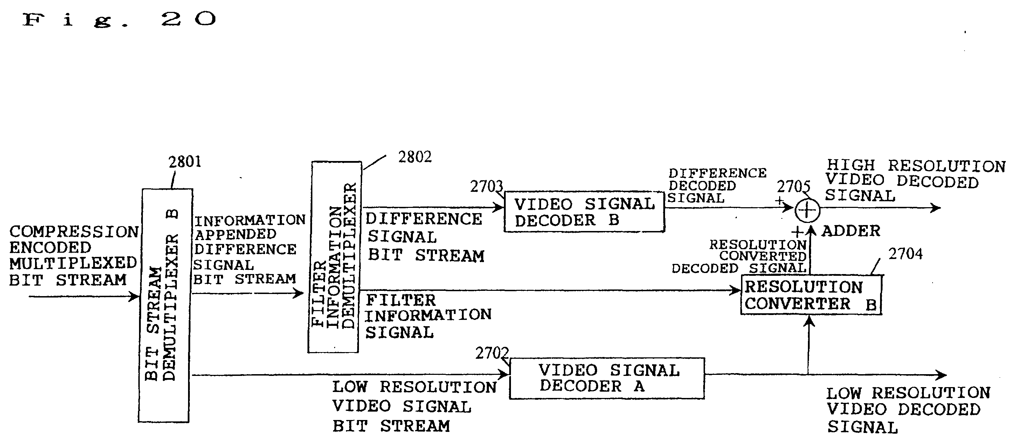

An embodiment of a layered video signal encoding apparatus according to a 20th invention of the present application will be described below with reference to Figure 20.

The bit stream demultiplexer B 2801 demultiplexes the compression encoded multiplexed bit stream into the low resolution video signal bit stream and the information appended difference signal bit stream for output. The filter information demultiplexer 2802 demultiplexes the information appended difference signal bit stream into the filter information signal and the difference signal bit stream for output. The video signal decoder A 2702 outputs a low resolution decoded video signal by decoding the low resolution video signal bit stream by performing an inverse of the prescribed video signal compression scheme A. The video signal decoder B 2703 outputs a difference decoded signal by decoding the difference signal bit stream by performing an inverse of the prescribed video signal compression scheme B. The resolution converter B 2704 outputs a resolution converted signal by converting the resolution to the same resolution as the difference decoded signal by using the horizontal filter and vertical filter obtained from the filter information signal. The adder 2705 generates a high resolution decoded video signal by taking a pixel by pixel sum between the difference decoded signal and the resolution converted signal.

The demultiplexing of the filter information signal in the filter information demultiplexer 2802 will be explained below by way of an example.

When the video signal compression encoding scheme B is an MPEG standard compression scheme, with the difference signal bit stream having the elementary stream syntax defined by MPEG, if the filter information signal has been appended as user data in the sequence header in the difference signal bit stream by using ESC (ExtensionStartcode) and UDSC (UserDataStartCode), then the filter information demultiplexer 2802 extracts the filter information signal from the sequence header and outputs it independently; in this case, the information appended difference signal bit stream may be output in its entirety as the difference signal bit stream.

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

In the resolution converter B 2704, if the ideal phase obtained from the number of taps and the coefficients of the horizontal filter, the ratio of the horizontal pixel count of the high resolution video signal to the horizontal pixel count of the low resolution video signal, the number of taps and the coefficients of the vertical filter, and the ratio of the vertical line count of the high resolution video signal to the vertical line count of the low resolution video signal, which are carried in the input filter information signal, exceeds the processing capacity of the resolution converter B 2704, the resolution converted signal may be generated with the closest possible phase within the processing capacity.

Further, when the filter information signal is tabulated, the number of taps and the coefficients of the horizontal filter, the number of taps and the coefficients of the vertical filter, the ratio of the horizontal pixel count of the high resolution video signal to the horizontal pixel count of the low resolution video signal, and the ratio of the vertical line count of the high resolution video signal to the vertical line count of the low resolution video signal may be obtained as the filter information signal from the table indicated by the received number.

Further, MPEG standard compression may be used for both the video signal compression encoding scheme A and the video signal compression encoding scheme B.

### (Embodiment 21)

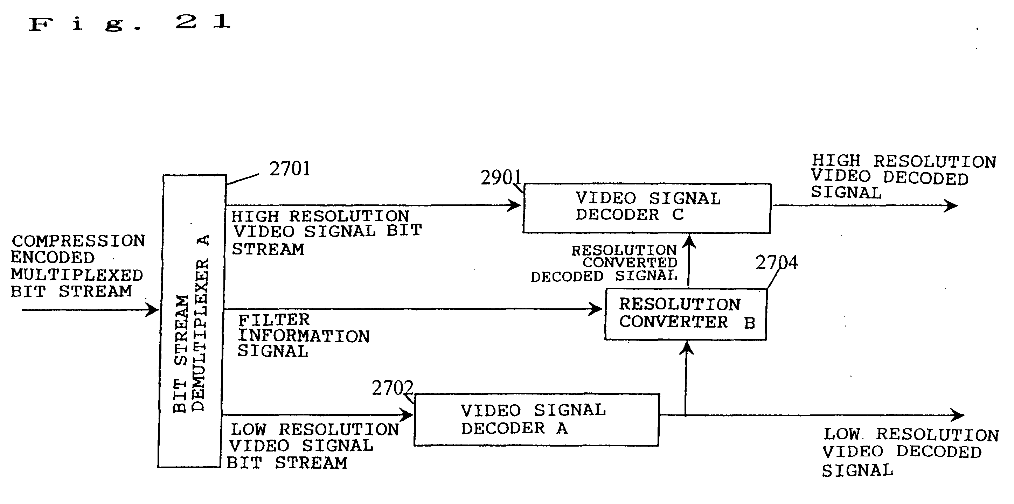

An embodiment of a layered video signal encoding apparatus according to a 21st invention of the present application will be described below with reference to Figure 21.

In Figure 21, reference numeral 2901 is a video signal decoder C. The bit stream demultiplexer A 2701 demultiplexes the compression encoded multiplexed bit stream into the filter information signal, low resolution video signal bit stream, and high resolution video signal bit stream for output.

The video signal decoder A 2702 outputs a low resolution decoded video signal by decoding the low resolution video signal bit stream by performing an inverse of the prescribed video signal compression scheme A.

The resolution converter B 2704 outputs a resolution converted signal by converting the resolution to the same resolution as the high resolution video signal by using the horizontal filter and vertical filter obtained from the filter information signal. The video signal decoder C 2901 outputs a high resolution decoded signal by decoding the high resolution video signal bit stream by performing an inverse of the prescribed video signal compression scheme C using the resolution converted signal and already decoded high resolution video signal.

The demultiplexing of the filter information signal in the bit stream demultiplexer A 2701 will be explained below by way of an example. When the video signal compression encoding scheme A and the video signal compression encoding scheme B are both MPEG standard compression schemes, with the low resolution video signal bit stream and the difference signal bit stream both having the elementary stream syntax defined by MPEG, and when the compression encoded multiplexed bit stream is output as a bit stream conforming to the transport stream syntax defined by MPEG, if the filter information signal has been added as a user defined stream to the PMT (Program Map Table), and the filter information signal itself has been multiplexed as a single elementary stream into the compression encoded multiplexed bit stream, then the filter information signal is demultiplexed as a single elementary stream.

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

In the resolution converter B 2704, if the ideal phase obtained from the number of taps and the coefficients of the horizontal filter, the ratio of the horizontal pixel count of the high resolution video signal to the horizontal pixel count of the low resolution video signal, the number of taps and the coefficients of the vertical filter, and the ratio of the vertical line count of the high resolution video signal to the vertical line count of the low resolution video signal, which are carried in the input filter information signal, exceeds the processing capacity of the resolution converter B 2704, the resolution converted signal may be generated with the closest possible phase within the processing capacity.

Further, when the filter information signal is tabulated, the number of taps and the coefficients of the horizontal filter, the number of taps and the coefficients of the vertical filter, the ratio of the horizontal pixel count of the high resolution video signal to the horizontal pixel count of the low resolution video signal, and the ratio of the vertical line count of the high resolution video signal to the vertical line count of the low resolution video signal may be obtained as the filter information signal from the table indicated by the received number.

Further, MPEG standard compression may be used for both the video signal compression encoding scheme A and the video signal compression encoding scheme C. The video signal compression encoding scheme C in the video signal encoder C may employ MPEG2 Spatial Scalable Profile compression, and the predicted image may use the midpoint value of the bit precision per pixel (for example, if the bit precision is 8 bits, then 128).

### (Embodiment 22)

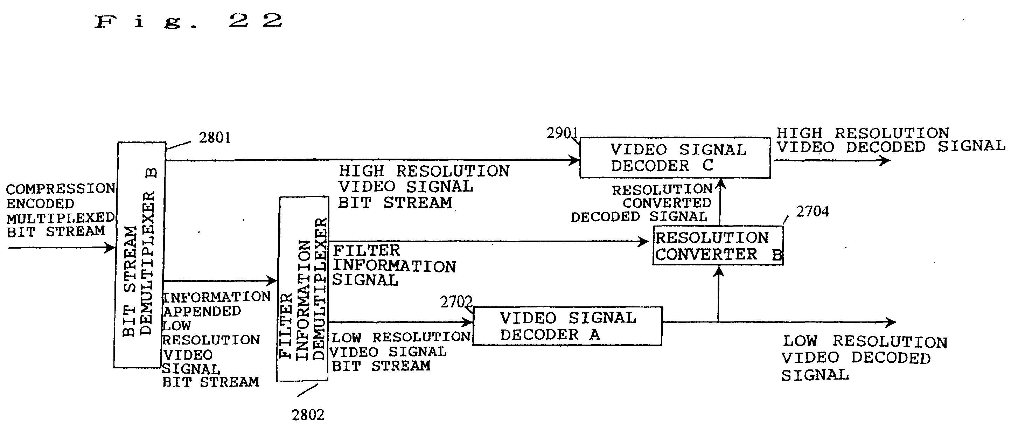

An embodiment of a layered video signal encoding apparatus according to a 22nd invention of the present application will be described below with reference to Figure 22.

The bit stream demultiplexer B 2801 demultiplexes the compression encoded multiplexed bit stream into the information appended low resolution video signal bit stream and the high resolution video signal bit stream for output. The filter information demultiplexer 2802 demultiplexes the information appended low resolution video signal bit stream into the filter information signal and the low resolution video signal bit stream for output. The video signal decoder A 2702 outputs a low resolution decoded video signal by decoding the low resolution video signal bit stream by performing an inverse of the prescribed video signal compression scheme A. The resolution converter B 2704 outputs a resolution converted signal by converting the resolution to the same resolution as the high resolution video signal by using the horizontal filter and vertical filter obtained from the filter information signal. The video signal decoder C 2901 outputs a high resolution decoded signal by decoding the high resolution video signal bit stream by performing an inverse of the prescribed video signal compression scheme C using the resolution converted signal and already decoded high resolution video signal.

The demultiplexing of the filter information signal in the filter information demultiplexer 2802 will be explained below by way of an example.

When the video signal compression encoding scheme A is an MPEG standard compression scheme, with the low resolution video signal bit stream having the elementary stream syntax defined by MPEG, if the filter information signal has been appended as user data in the sequence header in the low resolution video signal bit stream by using ESC (ExtensionStartcode) and UDSC (UserDataStartCode), then the filter information demultiplexer 2802 extracts the filter information signal from the sequence header and outputs it independently; in this case, the information appended low resolution video signal bit stream may be output in its entirety as the low resolution video signal bit stream.

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

In the resolution converter B 2704, if the ideal phase obtained from the number of taps and the coefficients of the horizontal filter, the ratio of the horizontal pixel count of the high resolution video signal to the horizontal pixel count of the low resolution video signal, the number of taps and the coefficients of the vertical filter, and the ratio of the vertical line count of the high resolution video signal to the vertical line count of the low resolution video signal, which are carried in the input filter information signal, exceeds the processing capacity of the resolution converter B 2704, the resolution converted signal may be generated with the closest possible phase within the processing capacity.

Further, when the filter information signal is tabulated, the number of taps and the coefficients of the horizontal filter, the number of taps and the coefficients of the vertical filter, the ratio of the horizontal pixel count of the high resolution video signal to the horizontal pixel count of the low resolution video signal, and the ratio of the vertical line count of the high resolution video signal to the vertical line count of the low resolution video signal may be obtained as the filter information signal from the table indicated by the received number.

Further, MPEG standard compression may be used for both the video signal compression encoding scheme A and the video signal compression encoding scheme C.

The video signal compression encoding scheme C in the video signal encoder C may employ MPEG2 Spatial Scalable Profile compression, and the predicted image may use the midpoint value of the bit precision per pixel (for example, if the bit precision is 8 bits, then 128).

### (Embodiment 23)

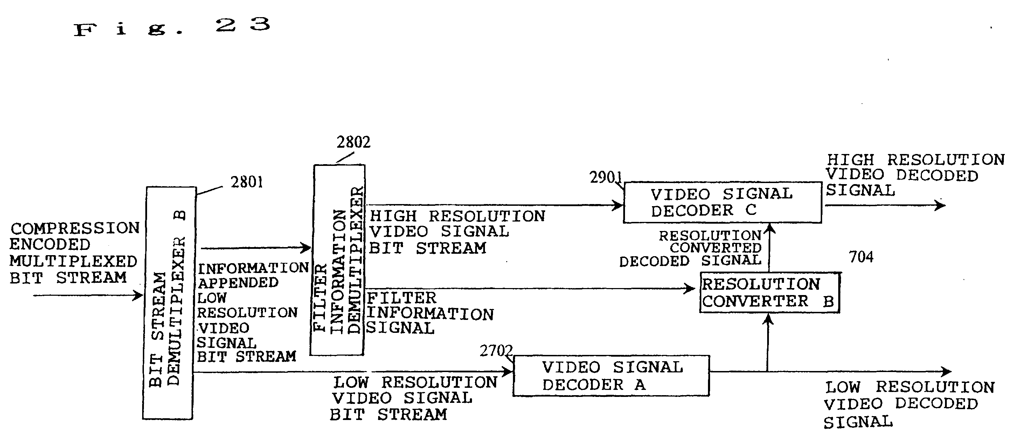

An embodiment of a layered video signal encoding apparatus according to a 23rd invention of the present application will be described below with reference to Figure 23.

The bit stream demultiplexer B 2801 demultiplexes the compression encoded multiplexed bit stream into the low resolution video signal bit stream and the information appended high resolution video signal bit stream for output.

The filter information demultiplexer 2802 demultiplexes the information appended high resolution video signal bit stream into the filter information signal and the high resolution video signal bit stream for output. The video signal decoder A 2702 outputs a low resolution decoded video signal by decoding the low resolution video signal bit stream by performing an inverse of the prescribed video signal compression scheme A. The resolution converter B 2704 outputs a resolution converted signal by converting the resolution to the same resolution as the high resolution video signal by using the horizontal filter and vertical filter obtained from the filter information signal. The video signal decoder C 2901 outputs a high resolution decoded signal by decoding the high resolution video signal bit stream by performing an inverse of the prescribed video signal compression scheme C using the resolution converted signal and already decoded high resolution video signal.

The demultiplexing of the filter information signal in the filter information demultiplexer 2802 will be explained below by way of an example. When the video signal compression encoding scheme A is an MPEG standard compression scheme, with the high resolution video signal bit stream having the elementary stream syntax defined by MPEG, if the filter information signal has been appended as user data in the sequence header in the high resolution video signal bit stream by using ESC (ExtensionStartcode) and UDSC (UserDataStartCode), then the filter information demultiplexer 2802 extracts the filter information signal from the sequence header and outputs it independently; in this case, the information appended high resolution video signal bit stream may be output in its entirety as the high resolution video signal bit stream.

The filter information signal may include information not only on the number of taps and the coefficients of the horizontal filter and the number of taps and the coefficients of the vertical filter, but also on the ratio of the horizontal pixel count of the high resolution video signal to the horizontal pixel count of the low resolution video signal and the ratio of the vertical line count of the high resolution video signal to the vertical line count of the low resolution video signal.

In the resolution converter B 2704, if the ideal phase obtained from the number of taps and the coefficients of the horizontal filter, the ratio of the horizontal pixel count of the high resolution video signal to the horizontal pixel count of the low resolution video signal, the number of taps and the coefficients of the vertical filter, and the ratio of the vertical line count of the high resolution video signal to the vertical line count of the low resolution video signal, which are carried in the input filter information signal, exceeds the processing capacity of the resolution converter B 2704, the resolution converted signal may be generated with the closest possible phase within the processing capacity.

Further, when the filter information signal is tabulated, the number of taps and the coefficients of the horizontal filter, the number of taps and the coefficients of the vertical filter, the ratio of the horizontal pixel count of the high resolution video signal to the horizontal pixel count of the low resolution video signal, and the ratio of the vertical line count of the high resolution video signal to the vertical line count of the low resolution video signal may be obtained as the filter information signal from the table indicated by the received number.

Further, MPEG standard compression may be used for both the video signal compression encoding scheme A and the video signal compression encoding scheme C.

The video signal compression encoding scheme C in the video signal encoder C may employ MPEG2 Spatial Scalable Profile compression, and the predicted image may use the midpoint value of the bit precision per pixel (for example, if the bit precision is 8 bits, then 128).

### POTENTIAL FOR EXPLOITATION IN INDUSTRY

The present invention can reproduce non-layered encoded video signals as well, and can also perform adaptive error correction.

Furthermore, the present invention achieves highly efficient resolution conversion, thus making it possible to improve the reproduction quality of the high resolution video signal.

## Claims

1. A video signal reproduction apparatus for decoding and reproducing a spatially layered encoded video signal, comprising:
a first transmit data demodulator which outputs demodulated data by demodulating transmit data input thereto;
a first demodulated data selector whereby, when a header in data on a receive channel in said demodulated data is decoded, if identification data, indicating that a low resolution bit stream, an encoded version of a low resolution video signal, and a high resolution bit stream, an encoded version of a difference signal taken between a high resolution video signal and low resolution signal, are multiplexed and modulated together, is recorded in a designated position in said header, then said low resolution bit stream and said high resolution bit stream are separated and output independently and, at the same time, a switch control signal indicating that said low resolution bit stream and said high resolution bit stream have been separated is output, whereas if only one video signal bit stream is contained, said video signal bit stream is output to a first high efficiency decoder side but nothing to a second high efficiency decoder side and, at the same time, a switch control signal indicating that only one video signal bit stream has been output is output;
a first high efficiency decoder which decodes said high resolution bit stream or said video signal bit stream;
a second high efficiency decoder which decodes said low resolution bit stream;
a resolution converter which converts the low resolution video signal decoded by said second high efficiency decoder into a high resolution signal having the same resolution as said high resolution video signal; and
a switch which, when said switch control signal indicates that said low resolution bit stream and said high resolution bit stream have been separated, adds an output of said first high efficiency encoder and an output of said resolution converter pixel by pixel to output a high resolution video signal and, when said switch control signal indicates that only one video signal bit stream has been output, passes the output of said first high efficiency encoder unchanged for output as said video signal.

2. A video signal reproduction apparatus for decoding and reproducing a spatially layered encoded video signal, comprising:
a first transmit data demodulator which outputs demodulated data by demodulating transmit data input thereto;
a second demodulated data selector whereby, when a header in data on a receive channel in said demodulated data is decoded, if identification data, indicating that a low resolution bit stream, an encoded version of a low resolution video signal, and a high resolution bit stream, an encoded version of a difference signal taken between a high resolution video signal and low resolution signal, are multiplexed and modulated together, is recorded in a designated position in said header, then said low resolution bit stream and said high resolution bit stream are separated and output independently and, at the same time, a switch control signal indicating that said low resolution bit stream and said high resolution bit stream have been separated is output, whereas if only one video signal bit stream is contained, and if the video signal carried therein is a high resolution signal having a resolution equal to or higher than a predetermined resolution, said video signal bit stream is output to a first high efficiency decoder side but nothing to a second high efficiency decoder side and, at the same time, a switch control signal indicating that only one video signal bit stream has been output is output, while, on the other hand, if only one video signal bit stream is contained, and if the video signal carried therein is a low resolution signal having a resolution lower than said predetermined resolution, said video signal bit stream is output to said second high efficiency decoder side but nothing to said first high efficiency decoder side and, at the same time, a switch control signal indicating that only one video signal bit stream has been output is output;
a first high efficiency decoder which decodes said high resolution bit stream or said video signal bit stream;
a second high efficiency decoder which decodes said low resolution bit stream or said video signal bit stream;
a resolution converter which converts the low resolution video signal decoded by said second high efficiency decoder into a high resolution video signal having the same resolution as said high resolution video signal; and
a switch which, when said switch control signal indicates that said low resolution bit stream and said high resolution bit stream have been separated, adds an output of said first high efficiency encoder and an output of said resolution converter pixel by pixel to output a high resolution video signal and, when said switch control signal indicates that only one video signal bit stream has been output, passes the output of said first high efficiency encoder unchanged for output as said high resolution video signal.

3. A video signal reproduction apparatus for decoding and reproducing a spatially layered encoded video signal, comprising:
a second transmit data demodulator which outputs demodulated data by demodulating transmit data input thereto, whereby if identification data, indicating that data on a receive channel in said transmit data is such one that a low resolution bit stream, an encoded version of a low resolution video signal, and a high resolution bit stream, an encoded version off a difference signal taken between a high resolution video signal and low resolution signal, are multiplexed and modulated together, is carried in a designated position in said transmit data, then a switch control signal indicating that said low resolution bit stream and said high resolution bit stream are to be separated is output, whereas if such identification data is not carried, a switch control signal indicating that one video signal bit stream is to be separated is output;
a third demodulated data selector which, when the signal from said transmit data demodulator indicates that said low resolution bit stream and said high resolution bit stream are to be separated, separates said low resolution bit stream and said high resolution bit stream and outputs the respective bit streams and, when the signal from said transmit data demodulator indicates only one video signal bit stream, outputs said video signal bit stream to a first high efficiency decoder side but nothing to a second high efficiency decoder side;
a first high efficiency decoder which decodes said high resolution bit stream or said video signal bit stream;
a second high efficiency decoder which decodes said low resolution bit stream;
a resolution converter which converts the low resolution video signal decoded by said second high efficiency decoder into a high resolution video signal having the same resolution as said high resolution video signal; and
a switch which, when said switch control signal indicates that said low resolution bit stream and said high resolution bit stream are to be separated, adds an output of said first high efficiency encoder and an output of said resolution converter pixel by pixel to output a high resolution video signal and, when said switch control signal indicates that only one video signal bit stream is to be output, passes the output of said first high efficiency encoder unchanged for output as said video signal.

4. A video signal reproduction apparatus for decoding and reproducing a spatially layered encoded video signal, comprising:
a second transmit data demodulator which outputs demodulated data by demodulating transmit data input thereto, whereby if identification data, indicating that data on a receive channel in said transmit data is such one that a low resolution bit stream, an encoded version of a low resolution video signal, and a high resolution bit stream, an encoded version of a difference signal taken between a high resolution video signal and low resolution signal, are multiplexed and modulated together, is carried in a designated position in said transmit data, then a switch control signal indicating that said low resolution bit stream and said high resolution bit stream are to be separated is output, whereas if such identification data is not carried, a switch control signal indicating that one video signal bit stream is to be separated is output;
a fourth demodulated data selector which, when the signal from said transmit data demodulator indicates that said low resolution bit stream and said high resolution bit stream are to be separated, separates said low resolution bit stream and said high resolution bit stream and outputs the respective bit streams and which, when the signal from said transmit data demodulator indicates that only one video signal bit stream is to be separated, separates said video signal bit stream whereby when the header thereof is decoded, if the resolution of the video signal is equal to or higher than a predetermined resolution, said video signal bit stream is output to said first high efficiency decoder side but nothing to said second high efficiency decoder side, whereas when said header is decoded, if the resolution of the video signal is lower than said predetermined resolution, said video signal bit stream is output to said second high efficiency decoder side but nothing to said first high efficiency decoder side;
a first high efficiency decoder which decodes said high resolution bit stream;
a second high efficiency decoder which decodes said low resolution bit stream;
a resolution converter which converts the low resolution video signal decoded by said second high efficiency decoder into a high resolution video signal having the same resolution as said high resolution video signal; and
a switch which, when said switch control signal indicates that said low resolution bit stream and said high resolution bit stream are to be separated, adds an output of said first high efficiency encoder and an output of said resolution converter pixel by pixel to output a high resolution video signal and, when said switch control signal indicates that only one video signal bit stream has been output, passes the output of said first high efficiency encoder unchanged for output as said video signal.

5. A video signal reproduction apparatus according to any one of claims 1 to 4, wherein when said switch control signal indicates that said low resolution bit stream and said high resolution bit stream are separated, if an error is detected in said high resolution bit stream, an error correction signal is sent to said switch, and said switch that received said error correction signal continues to select the output of said resolution converter for output until correct decoding can be accomplished from an errored portion.

6. A video signal reproduction apparatus according to any one of claims 1 to 4, wherein said first high efficiency decoder has a function whereby when said switch control signal indicates that said low resolution bit stream and said high resolution bit stream are separated, if an error is detected in said high resolution bit stream, said first high efficiency decoder continues to output a signal of a predetermined level as a high resolution video signal until correct decoding can be accomplished from an errored portion.

7. A video signal reproduction apparatus according to any one of claims 1 to 4, wherein said first high efficiency decoder has a function whereby when said switch control signal indicates that said low resolution bit stream and said high resolution bit stream are separated, if an error is detected in said high resolution bit stream, said first high efficiency decoder performs error correction using information of said low resolution bit stream residing in said second high efficiency decoder, until correct decoding can be accomplished from an errored portion.

8. A video signal reproduction apparatus for playing back a recording medium recorded by a video signal recording apparatus comprising video signal dividing means for dividing a first digital video signal into a second digital video signal representing a valid region and digital video signals for other regions than said valid region, an additional information generating means for generating additional information, video signal converting means for converting said second digital video signal into a third digital video signal by adding a dummy signal, compressing means for creating compressed data by applying prescribed high efficiency encoding to said third digital video signal, data replacing means for replacing data at a designated position in said compressed data by said additional information, and recording means for recording said compressed data processed by said data replacing means onto said recording medium, said video signal reproduction apparatus comprising:
reproducing means for reproducing said compressed data recorded on said recording medium;
additional information reproducing means for recovering said additional information recorded at said designated position in said compressed data;
decoding means for outputting a digital video signal by decoding said compressed data; and
digital video signal reproducing means for recovering said second digital video signal from said digital video signal in reordering fashion.

9. A video signal reproduction apparatus for playing back a recording medium recorded by a video signal recording apparatus comprising video signal dividing means for dividing a first digital video signal into a second digital video signal representing a valid region and digital video signals for other regions than said valid region, video signal converting means for converting said second digital video signal into a third digital video signal by adding a dummy signal, compressing means for creating compressed data by applying prescribed high efficiency encoding to said third digital video signal, data replacing means for replacing data at a designated position in said compressed data by an additional region digital video signal representing a region in said other regions than said valid region, end recording means for recording said compressed data processed by said data replacing means onto said recording medium, said video signal reproduction apparatus comprising:
reproducing means for reproducing said compressed data recorded on said recording medium;
additional region digital video signal reproducing means for recovering said additional region digital video signal recorded at said designated position in said compressed data;
decoding means for outputting a digital video signal by decoding said compressed data by performing an inverse of said prescribed high efficiency encoding;
digital video signal reproducing means for recovering said second digital video signal from said digital video signal in reordering fashion; and
digital video signal reordering means for reproducing said first digital video signal by reordering said additional region digital video signal and said second digital video signal.

10. A video signal reproduction apparatus for playing back a recording medium recorded by a video signal recording apparatus comprising video signal dividing means for dividing a first digital video signal into a second digital video signal representing a valid region and digital video signals for other regions than said valid region, additional information compressing means for creating first compressed data by applying prescribed first high efficiency encoding to said additional information generated by said additional information generating means, video signal converting means for converting said second digital video signal into a third digital video signal by adding a dummy signal, compressing means for creating second compressed data by applying prescribed second high efficiency encoding to said third digital video signal, data replacing means for replacing data at a designated position in said second compressed data by said first compressed data, and recording means for recording said second compressed data processed by said data replacing means onto said recording medium, said video signal reproduction apparatus comprising:
reproducing means for reproducing said compressed data recorded on said recording medium;
additional information decoding means for outputting said additional information by decoding said first compressed data by performing an inverse of said prescribed first high efficiency encoding;
decoding means for outputting a digital video signal by decoding said compressed data by performing an inverse of said prescribed second high efficiency encoding; and
digital video signal reproducing means for recovering said second digital video signal from said digital video signal in reordering fashion.

11. A video signal reproduction apparatus for playing back a recording medium recorded by a video signal recording apparatus comprising video signal dividing means for dividing a first digital video signal into a second digital video signal representing a valid region and digital video signals for other regions than said valid region, compressing means for creating first compressed data by applying prescribed first high efficiency encoding to an additional region digital video signal representing a region in said other regions than said valid region, video signal converting means for converting said second digital video signal into a third digital video signal by adding a dummy signal, compressing means for creating second compressed data by applying prescribed second high efficiency encoding to said third digital video signal, data replacing means for replacing data at a designated position in said second compressed data by said first compressed data, and recording means for recording said second compressed data processed by said data replacing means onto said recording medium, said video signal reproduction apparatus comprising:
reproducing means for reproducing said compressed data recorded on said recording medium;
additional region compressed data reproducing means for recovering as additional region compressed data said data recorded at said designated position in said compressed data;
additional region digital video signal decoding means for outputting said additional region digital video signal by decoding said additional region compressed data by performing an inverse of said prescribed first high efficiency encoding;
decoding means for outputting a digital signal by decoding said compressed data by performing an inverse of said prescribed second high efficiency encoding;
valid region digital video signal reproducing means for recovering said valid region digital video signal from said digital signal; and
digital video signal reordering means for reproducing said digital video signal by reordering said additional region digital video signal and said valid region digital video signal.

12. A layered video signal encoding apparatus comprising:
a resolution converter (A) which resolution converts an input high resolution video signal into a low resolution video signal for output;
a video signal encoder (A) which outputs a low resolution video signal bit stream by encoding said low resolution video signal output from said resolution converter (A) by using a prescribed video signal compression encoding scheme (A), and also outputs a low resolution video decoded signal by decoding said low resolution video signal bit stream;
a resolution converter (B) which outputs a resolution converted decoded signal by resolution converting said low resolution video decoded signal output from said video signal encoder (A) to the same resolution as said input high resolution video signal by using filters horizontally and vertically, and also outputs a filter information signal which at least includes information on the number of taps and the coefficients of said horizontal filter and the number of taps and the coefficients of said vertical filter;
a difference calculator which outputs a difference signal representing a pixel by pixel difference between said input high resolution video signal and said resolution converted decoded signal output from said resolution converter (B);
a video signal encoder (B) which outputs a difference signal bit stream by encoding said difference signal output from said difference calculator by using a prescribed video signal compression encoding scheme (B); and
a bit stream multiplexer (A) which multiplexes together said filter information signal output from said resolution converter (B), said low resolution video signal bit stream output from said video signal encoder (A), and said difference signal bit stream output from said video signal encoder (B).

13. A layered video signal encoding apparatus comprising:
a resolution converter (A) which resolution converts an input high resolution video signal into a low resolution video signal for output;
a video signal encoder (A) which outputs a low resolution video signal bit stream by encoding said low resolution video signal output from said resolution converter (A) by using a prescribed video signal compression encoding scheme (A), and also outputs a low resolution video decoded signal by decoding said low resolution video signal bit stream;
a resolution converter (B) which outputs a resolution converted decoded signal by resolution converting said low resolution video decoded signal output from said video signal encoder (A) to the same resolution as said input high resolution video signal by using filters horizontally and vertically, and also outputs a filter information signal which at least includes information on the number of taps and the coefficients of said horizontal filter and the number of taps and the coefficients of said vertical filter;
a difference calculator which outputs a difference signal representing a pixel by pixel difference between said input high resolution video signal and said resolution converted decoded signal output from said resolution converter (B);
a video signal encoder (B) which outputs a difference signal bit stream by encoding said difference signal output from said difference calculator by using a prescribed video signal compression encoding scheme (B);
a filter information appender which outputs an information appended low resolution video signal bit stream by appending said filter information signal output from said resolution converter (B) to said low resolution video signal bit stream output from said video signal encoder (A) in accordance with a prescribed format; and
a bit stream multiplexer (B) which multiplexes said difference signal bit stream output from said video signal encoder (B) with said information appended low resolution video signal bit stream output from said filter information appender.

14. A layered video signal encoding apparatus comprising:
a resolution converter (A) which resolution converts an input high resolution video signal into a low resolution video signal for output;
a video signal encoder (A) which outputs a low resolution video signal bit stream by encoding said low resolution video signal output from said resolution converter (A) by using a prescribed video signal compression encoding scheme (A), and also outputs a low resolution video decoded signal by decoding said low resolution video signal bit stream;
a resolution converter (B) which outputs a resolution converted decoded signal by resolution converting said low resolution video decoded signal output from said video signal encoder (A) to the same resolution as said input high resolution video signal by using filters horizontally and vertically, and also outputs a filter information signal which at least includes information on the number of taps and the coefficients of said horizontal filter and the number of taps and the coefficients of said vertical filter;
a difference calculator which outputs a difference signal representing a pixel by pixel difference between said input high resolution video signal and said resolution converted decoded signal output from said resolution converter (B);
a video signal encoder B which outputs a difference signal bit stream by encoding said difference signal output from said difference calculator by using a prescribed video signal compression encoding scheme (B);
a filter information appender which outputs an information appended difference signal bit stream by appending said filter information signal output from said resolution converter (B) to said difference signal bit stream output from said video signal encoder (B) in accordance with a prescribed format; and
a bit stream multiplexer (B) which multiplexes said low resolution video signal bit stream output from said video signal encoder (A) with said information appended difference signal bit stream output from said filter information appender.

15. A layered video signal encoding apparatus comprising:
a resolution converter (A) which resolution converts an input high resolution video signal into a low resolution video signal for output;
a video signal encoder (A) which outputs a low resolution video signal bit stream by encoding said low resolution video signal output from said resolution converter (A) by using a prescribed video signal compression encoding scheme (A), and also outputs a low resolution video decoded signal by decoding said low resolution video signal bit stream;
a resolution converter (B) which outputs a resolution converted decoded signal by resolution converting said low resolution video decoded signal output from said video signal encoder (A) to the same resolution as said input high resolution video signal by using filters horizontally and vertically, and also outputs a filter information signal which at least includes information on the number of taps and the coefficients of said horizontal filter and the number of taps and the coefficients of said vertical filter;
a video signal encoder (C) which encodes said input high resolution video signal by a prescribed video signal compression encoding scheme (C) using a predicted image, wherein a spatially predicted image is generated from said resolution converted decoded signal output from said resolution converter (B) and a temporally predicted image from an image decoded from the already encoded high resolution video signal and, by using said spatially predicted image and said temporally predicted image, said predicted image is generated for each encoded unit that contains at least one pixel video signal, and wherein a difference signal taken between said input high resolution video signal and said predicted image is compression encoded by said video signal compression encoding scheme (C) and output as a high resolution video signal bit stream; and
a bit stream multiplexer (A) which multiplexes together said filter information signal output from said resolution converter (B), said low resolution video signal bit stream output from said video signal encoder (A), and said high resolution video signal bit stream output from said video signal encoder (B).

16. A layered video signal encoding apparatus comprising:
a resolution converter (A) which resolution converts an input high resolution video signal into a low resolution video signal for output;
a video signal encoder (A) which outputs a low resolution video signal bit stream by encoding said low resolution video signal output from said resolution converter (A) by using a prescribed video signal compression encoding scheme (A), and also outputs a low resolution video decoded signal by decoding said low resolution video signal bit stream;
a resolution converter (B) which outputs a resolution converted decoded signal by resolution converting said low resolution video decoded signal output from said video signal encoder (A) to the same resolution as said input high resolution video signal by using filters horizontally and vertically, and also outputs a filter information signal which at least includes information on the number of taps and the coefficients of said horizontal filter and the number of taps and the coefficients of said vertical filter;
a video signal encoder (C) which encodes said input high resolution video signal by a prescribed video signal compression encoding scheme (C) using a predicted image, wherein a spatially predicted image is generated from said resolution converted decoded signal output from said resolution converter B and a temporally predicted image from an image decoded from the already encoded high resolution video signal and, by using said spatially predicted image and said temporally predicted image, said predicted image is generated for each encoded unit that contains at least one pixel video signal, and wherein a difference signal taken between said input high resolution video signal and said predicted image is compression encoded by said video signal compression encoding scheme (C) and output as a high resolution video signal bit stream;
a filter information appender which outputs an information appended low resolution video signal bit stream by appending said filter information signal output from said resolution converter (B) to said low resolution video signal bit stream output from said video signal encoder (A) in accordance with a prescribed format; and
a bit stream multiplexer (B) which multiplexes said high resolution video signal bit stream output from said video signal encoder (C) with said information appended low resolution video signal bit stream output from said filter information appender.

17. A layered video signal encoding apparatus comprising:
a resolution converter (A) which resolution converts an input high resolution video signal into a low resolution video signal for output;
a video signal encoder (A) which outputs a low resolution video signal bit stream by encoding said low resolution video signal output from said resolution converter (A) by using a prescribed video signal compression encoding scheme (A), and also outputs a low resolution video decoded signal by decoding said low resolution video signal bit stream;
a resolution converter (B) which outputs a resolution converted decoded signal by resolution converting said low resolution video decoded signal output from said video signal encoder (A) to the same resolution as said input high resolution video signal by using filters horizontally and vertically, and also outputs a filter information signal which at least includes information on the number of taps and the coefficients of said horizontal filter and the number of taps and the coefficients of said vertical filter;
a video signal encoder (C) which encodes said input high resolution video signal by a prescribed video signal compression encoding scheme (B) using a predicted image, wherein a spatially predicted image is generated from said resolution converted decoded signal output from said resolution converter (B) and a temporally predicted image from an image decoded from the already encoded high resolution video signal and, by using said spatially predicted image and said temporally predicted image, said predicted image is generated for each encoded unit that contains at least one pixel video signal, and wherein a difference signal taken between said input high resolution video signal and said predicted image is compression encoded by said video signal compression encoding scheme (C) and output as a high resolution video signal bit stream;
a filter information appender which outputs an information appended high resolution video signal bit stream by appending said filter information signal output from said resolution converter (B) to said high resolution video signal bit stream output from said video signal encoder (C) in accordance with a prescribed format; and
a bit stream multiplexer (B) which multiplexes said low resolution video signal bit stream output from said video signal encoder (A) with said information appended high resolution video signal bit stream output from said filter information appender.

18. A layered video signal decoding apparatus comprising:
a bit stream demultiplexer (A) which demultiplexes a compression encoded multiplexed input bit stream into a filter information signal, a low resolution video signal bit stream, and a difference signal bit stream for output;
a video signal decoder (A) which outputs a low resolution decoded video signal by decoding said low resolution video signal bit stream by performing an inverse of a prescribed video signal compression scheme (A);
a video signal decoder (B) which outputs a difference decoded signal by decoding said difference signal bit stream by performing an inverse of a prescribed video signal compression scheme (B);
a resolution converter (C) which outputs a resolution converted signal by resolution converting said low resolution decoded video signal output from said video signal decoder (A) to the same resolution as said difference decoded signal output from said video signal decoder (B) by using a horizontal filter and a vertical filter obtained from said filter information signal; and
an adder which generates a high resolution decoded video signal by taking a pixel by pixel sum between said difference decoded signal output from said video signal decoder (B) and said resolution converted signal output from said resolution converter (C).

19. A layered video signal decoding apparatus comprising:
a bit stream demultiplexer (B) which demultiplexes a compression encoded multiplexed input bit stream into an information appended low resolution video signal bit stream and a difference signal bit stream for output;
a filter information demultiplexer which demultiplexes said information appended low resolution video signal bit stream into a filter information signal and a low resolution video signal bit stream for output;
a video signal decoder (A) which outputs a low resolution decoded video signal by decoding said low resolution video signal bit stream by performing an inverse of a prescribed video signal compression scheme (A);
a video signal decoder (B) which outputs a difference decoded signal by decoding said difference signal bit stream by performing an inverse of a prescribed video signal compression scheme (B);
a resolution converter (C) which outputs a resolution converted signal by resolution converting said low resolution decoded video signal output from said video signal decoder (A) to the same resolution as said difference decoded signal output from said video signal decoder (B) by using a horizontal filter and a vertical filter obtained from said filter information signal; and
an adder which generates a high resolution decoded video signal by taking a pixel by pixel sum between said difference decoded signal output from said video signal decoder (B) and said resolution converted signal output from said resolution converter (C).

20. A layered video signal decoding apparatus comprising:
a bit stream demultiplexer (B) which demultiplexes a compression encoded multiplexed input bit stream into a low resolution video signal bit stream and an information appended difference signal bit stream for output;
a filter information demultiplexer which demultiplexes said information appended difference signal bit stream into a filter information signal and a difference signal bit stream for output;
a video signal decoder (A) which outputs a low resolution decoded video signal by decoding said low resolution video signal bit stream by performing an inverse of a prescribed video signal compression scheme (A);
a video signal decoder (B) which outputs a difference decoded signal by decoding said difference signal bit stream by performing an inverse of a prescribed video signal compression scheme (B);
a resolution converter (C) which outputs a resolution converted signal by resolution converting said low resolution decoded video signal output from said video signal decoder (A) to the same resolution as a high resolution decoded signal output from said video signal decoder (B) by using a horizontal filter and a vertical filter obtained from said filter information signal; and
an adder which generates a high resolution decoded video signal by taking a pixel by pixel sum between said difference decoded signal output from said video signal decoder (B) and said resolution converted signal output from said resolution converter (C).

21. A layered video signal decoding apparatus comprising:
a bit stream demultiplexer (A) which demultiplexes a compression encoded multiplexed input bit stream into a filter information signal, a low resolution video signal bit stream, and a high resolution video signal bit stream for output;
a video signal decoder (A) which outputs a low resolution decoded video signal by decoding said low resolution video signal bit stream by performing an inverse of a prescribed video signal compression scheme (A);
a resolution converter (C) which outputs a resolution converted signal by resolution converting said low resolution decoded video signal output from said video signal decoder A to the same resolution as a high resolution decoded signal output from a video signal decoder (C) by using a horizontal filter and a vertical filter obtained from said filter information signal; and
said video signal decoder (C) which outputs said high resolution decoded signal by decoding said high resolution video signal bit stream by performing an inverse of a prescribed video signal compression scheme (C) using said resolution converted signal and already decoded high resolution video signal.

22. A layered video signal decoding apparatus comprising:
a bit stream demultiplexer (B) which demultiplexes a compression encoded multiplexed input bit stream into an information appended low resolution video signal bit stream and a high resolution signal bit stream for output;
a filter information demultiplexer which demultiplexes said information appended low resolution video signal bit stream into a filter information signal and a low resolution video signal bit stream for output;
a video signal decoder (A) which outputs a low resolution decoded video signal by decoding said low resolution video signal bit stream by performing an inverse of a prescribed video signal compression scheme (A);
a resolution converter (C) which outputs a resolution converted signal by resolution converting said low resolution decoded video signal output from said video signal decoder (A) to the same resolution as a high resolution decoded signal output from a video signal decoder (C) by using a horizontal filter and a vertical filter obtained from said filter information signal; and
said video signal decoder (C) which outputs said high resolution decoded signal by decoding said high resolution video signal bit stream by performing an inverse of a prescribed video signal compression scheme (C) using said resolution converted signal and already decoded high resolution video signal.

23. A layered video signal decoding apparatus comprising:
a bit stream demultiplexer (B) which demultiplexes a compression encoded multiplexed input bit stream into a low resolution video signal bit stream and an information appended high resolution video signal bit stream for output;
a filter information demultiplexer which demultiplexes said information appended high resolution video signal bit stream into a filter information signal and a high resolution video signal bit stream for output;
a video signal decoder (A) which outputs a low resolution decoded video signal by decoding said low resolution video signal bit stream by performing an inverse of a prescribed video signal compression scheme (A);
a resolution converter (C) which outputs a resolution converted signal by resolution converting said low resolution decoded video signal output from said video signal decoder (A) to the same resolution as a high resolution decoded signal output from a video signal decoder (C) by using a horizontal filter and a vertical filter obtained from said filter information signal; and
said video signal decoder (C) which outputs said high resolution decoded signal by decoding said high resolution video signal encoded signal by performing an inverse of a prescribed video signal compression scheme (C) using said resolution converted signal and already decoded high resolution video signal.
